# EUROPEAN PATENT APPLICATION

(11) **EP 4 780 112 A1**
(43) Date of publication of application: **22.07.2026**
(21) Application number: 23952173.5
(22) Date of filing: 11.09.2023
(51) Int. Cl.: H04W 72/40, H04W 16/14, H04W 72/02, H04W 72/25, H04W 72/54

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); NAGATA, Satoshi, Tokyo 100-6150 (JP)
(74) Representative: Hoffmann Eitle
(86) International application number: PCT/JP2023/033107
(87) International publication number: WO 2025/057276

(57) **Abstract**

A terminal includes:
a control unit configured to select fourth resources when detecting first resources reserved by another terminal in an unlicensed band, the fourth resources not including:
the first resources;
second resources preceding the first resources in a time domain and including a first number of resources; or
third resources following the first resources in the time domain and including a second number of resources;

a receiving unit configured to perform listen-before-talk (LBT) for using the fourth resources; and
a transmitting unit configured to carry out a transmission using the fourth resources when the LBT is successful, and
each resource included in the second and third resources has a predetermined length.

## Description

### Technical Field

The present invention relates to a terminal and a communication method for use in a wireless communication system.

### Background Art

In long term evolution (LTE) and a succeeding system of LTE (for example, LTE Advanced (LTE-A), new radio (NR) (also referred to as 5G), etc.), studies on device-to-device (D2D) technology, which allows terminals to communicate directly with each other without involving a base station, are underway (see, for example, Non-Patent Document 1).

Assuming that terminals and base stations are present, D2D can reduce the traffic between the terminals and base stations, and enables the terminals to communicate with each other even when, for example, natural disasters or the like occur and the base stations are unable to communicate. D2D is referred to as "sidelink" in the 3rd generation partnership project (3GPP: registered trademark). However, "D2D" is more commonly used and will be used throughout this specification. When appropriate, the term "sidelink" will also be used in the following description of the embodiment.

D2D communication is roughly divided into: D2D discovery for discovering other communicable terminals; and D2D communication for allowing direct communication between terminals (also referred to as "D2D direct communication," "D2D communication," "device-to-device direct communication," etc.). In the following description, D2D communication, D2D discovery, and the like will be simply referred to as "D2D" when not particularly distinguished from each other. Furthermore, a signal transmitted and received in D2D will be referred to as a "D2D signal." Various use cases of vehicle-to-everything (V2X) services in NR are under study (see, for example, Non-Patent Document 2).

NR Release 17 (see, for example, Non-Patent Document 3) explores the use of higher frequency bands than in past releases. For example, in the frequency band from 52.6 GHz to 71 GHz, applicable numerologies such as subcarrier spacing and channel bandwidth, the design of the physical layer, and problems that might arise in actual wireless communication, and so forth are studied.

### Citation List

### Non-Patent Documents

Non-Patent Document 1: 3GPP TS 38.211 V17.4.0 (2022-12)
Non-Patent Document 2: 3GPP TR 22.886 V16.2.0 (2018-12)
Non-Patent Document 3: 3GPP TS 38.306 V17.3.0 (2022-12)
Non-Patent Document 4: 3GPP TS 37.213 V17.4.0 (2022-12)

### Summary of Invention

### Technical Problem

In newly planned frequency bands, where higher frequencies than in the past are planned for use, unlicensed bands are defined. Various regulations are set forth for unlicensed bands; for example, "listen before talk" (LBT) is performed when accessing a channel. When D2D communication is adopted in a high frequency band, the operation needs to comply with regulations for unlicensed bands.

To avoid LBT failures, when one UE detects resource reservation information that indicates a resource reserved for another UE, the first UE operates not to select resources from specific sections before and after the resource reserved for the second UE in the time domain. Furthermore, assuming that resources are defined in units of a predetermined number of consecutive slots, how to determine where the above specific sections of resources are located is not clear.

The present invention has been made in view of the foregoing and aims to reduce the likelihood of LBT failures in unlicensed bands.

### Solution to Problem

According to the technique disclosed herein, a terminal is provided. This terminal includes:
a control unit configured to select fourth resources when detecting first resources reserved by another terminal in an unlicensed band, the fourth resources not including:
   the first resources;
   second resources preceding the first resources in the time domain and including a first number of resources; or
   third resources following the first resources in the time domain and including a second number of resources;
a receiving unit configured to perform listen-before-talk (LBT) for using the fourth resources; and
a transmitting unit configured to carry out a transmission using the fourth resources when the LBT is successful, and
each resource included in the second and third resources has a predetermined length.

### Advantageous Effects of Invention

According to the technique disclosed herein, the likelihood of LBT failures in unlicensed bands can be reduced.

### Brief Description of Drawings

[FIG. 1] FIG. 1 is a diagram for explaining V2X;
[FIG. 2] FIG. 2 is a sequence diagram showing a first example of V2X operation;
[FIG. 3] FIG. 3 is a sequence diagram showing a second example of V2X operation;
[FIG. 4] FIG. 4 is a sequence diagram showing a third example of V2X operation;
[FIG. 5] FIG. 5 is a sequence diagram showing a fourth example of V2X operation;
[FIG. 6] FIG. 6 is a diagram showing an example of sensing operation;
[FIG. 7] FIG. 7 is a flowchart explaining an example of pre-emption operation;
[FIG. 8] FIG. 8 is a diagram showing an example of pre-emption operation;
[FIG. 9] FIG. 9 is a diagram showing an example of partial sensing operation;
[FIG. 10] FIG. 10 is a diagram for explaining an example of periodic-based partial sensing;
[FIG. 11] FIG. 11 is a diagram for explaining an example of contiguous partial sensing;
[FIG. 12] FIG. 12 is a diagram showing examples of frequency ranges according to an embodiment of the present invention;
[FIG. 13] FIG. 13 is a diagram for explaining a first example of LBT;
[FIG. 14] FIG. 14 is a diagram for explaining a second example of LBT;
[FIG. 15] FIG. 15 is a diagram for explaining a third example of LBT;
[FIG. 16] FIG. 16 is a diagram for explaining a first example of wideband operation;
[FIG. 17] FIG. 17 is a diagram for explaining a second example of wideband operation;
[FIG. 18] FIG. 18 is a diagram for explaining a third example of wideband operation;
[FIG. 19] FIG. 19 is a diagram for explaining a fourth example of wideband operation;
[FIG. 20] FIG. 20 is a diagram for explaining a first example of resource selection according to an embodiment of the present invention;
[FIG. 21] FIG. 21 is a diagram for explaining a second example of resource selection according to an embodiment of the present invention;
[FIG. 22] FIG. 22 is a diagram for explaining MCSt according to an embodiment of the present invention;
[FIG. 23] FIG. 23 is a diagram for explaining a first example of transmission according to an embodiment of the present invention;
[FIG. 24] FIG. 24 is a diagram for explaining a second example of transmission according to an embodiment of the present invention;
[FIG. 25] FIG. 25 is a diagram showing an example functional structure of a base station 10 according to an embodiment of the present invention;
[FIG. 26] FIG. 26 is a diagram showing an example functional structure of a terminal 20 according to an embodiment of the present invention;
[FIG. 27] FIG. 27 is a diagram showing an example hardware structure of the base station 10 or the terminal 20 according to an embodiment of the present invention; and
[FIG. 28] FIG. 28 is a diagram showing an example structure of a vehicle 2001 according to an embodiment of the present invention.

### Description of Embodiments

Hereinafter, an embodiment of the present invention will be described with reference to the accompanying drawings. However, the following embodiment is only an example, and the applicability of the present invention is by no means limited to the following embodiment.

In the operation of the wireless communication system according to the embodiment of the present invention, various existing techniques are used as appropriate. Although LTE is one example of such existing techniques, the present invention is by no means limited to existing LTE. In addition, unless otherwise specified, the term "LTE" used in the present specification has a broad meaning covering LTE-Advanced, systems that appeared after LTE-Advanced (for example, NR), and a wireless local area network (LAN).

In the following embodiment of the present invention, the duplex method may be a time division duplex (TDD) method, a frequency division duplex (FDD) method, or other methods (for example, flexible duplex and the like).

In addition, in the following embodiment of the present invention, when a radio parameter or the like is "set" (or "configured"), this might mean that a predetermined value is configured in advance ("preconfigured") or that a radio parameter indicated by a base station 10 or a terminal 20 is configured.

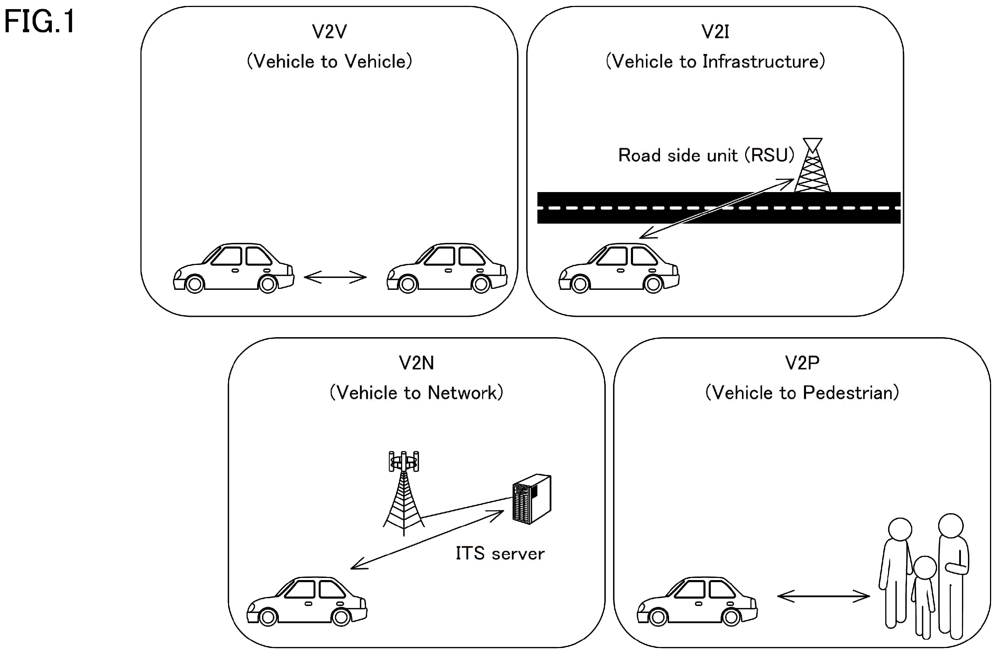

FIG. 1 is a diagram for explaining V2X. In 3GPP, studies are underway to implement vehicle-to-everything (V2X) or enhanced V2X (eV2X) communication by enhancing D2D functions, and its standardization is in progress. As illustrated in FIG. 1, V2X refers to part of various intelligent transport systems (ITS) and is a generic name for: vehicle-to-vehicle communication (V2V), which is a mode of communication between vehicles; vehicle-to-infrastructure communication (V2I), which is a mode of communication between a vehicle and a road-side unit (RSU) installed beside a road; vehicle-to-network communication (V2N), which is a mode of communication between a vehicle and an ITS server; and vehicle-to-pedestrian communication (V2P), which is a mode of communication between a vehicle and a mobile terminal that a pedestrian carries with him/her.

In addition, in 3GPP, V2X using LTE or NR cellular communication and device-to-device communication is under research. V2X that uses cellular communication is also referred to as "cellular V2X." In NR V2X, studies are underway to realize large capacity, low delay, high reliability, and quality-of-service (QoS) control.

For LTE or NR V2X, it is likely that research and studies will go beyond 3GPP technical specifications in the future. For example, it is expected that discussions will be held on: ensuring interoperability; reducing costs by implementation of higher layers; the method of using multiple radio access technologies (RATs) together or switching between them; regulatory compliance in each country; and the method of acquiring, distributing, using, and managing a database of LTE or NR V2X platform data.

Although the following embodiment of the present invention will primarily assume a use case in which a communication device is mounted on a vehicle, the present invention's embodiment is by no means limited to such a use case. For example, the communication device may be a terminal device that a person carries with him/her or a device mounted on a drone or an aircraft. The communication device may also be a base station, an RSU, a relay station (relay node), a terminal device with scheduling capabilities, or the like.

Note that sidelink (SL) may be distinguished from uplink (UL) or downlink (DL) based on any one of, or a combination of, the following (1) to (4). Furthermore, SL may be referred to as by a different name:
(1) Resource allocation in the time domain;
(2) Resource allocation in the frequency domain;
(3) Synchronization signals for reference (including sidelink synchronization signals (SLSS)); and
(4) Reference signals for path loss measurement for transmission power control.

In addition, for orthogonal frequency division multiplexing (OFDM) for SL or UL, any of cyclic-prefix OFDM (CP-OFDM), discrete Fourier transform-spread-OFDM (DFT-S-OFDM), OFDM without transform pre-coding, and OFDM with transform pre-coding may be applied.

In LTE SL, mode 3 and mode 4 are defined for the allocation of SL resources to a terminal 20. In mode 3, transmission resources are allocated dynamically by downlink control information (DCI) transmitted from a base station 10 to the terminal 20. Furthermore, in mode 3, semi-persistent scheduling (SPS) may be employed. In mode 4, the terminal 20 autonomously selects transmissions resource from a resource pool.

A "slot" in the following embodiment of the present invention may be replaced or interchangeable with a symbol, a mini-slot, a sub-frame, a radio frame, a transmission time interval (TTI), and so forth. In addition, a "cell" in the following embodiment of the present invention may be replaced or interchangeable with a cell group, a carrier component, a bandwidth part (BWP), a resource pool, a resource, a radio access technology (RAT), a system (such as a wireless LAN), and so forth.

In the following embodiment of the present invention, a terminal 20 need not be a V2X terminal, and any type of terminal that supports D2D communication may be used. For example, a terminal 20 may be a smartphone that a user carries with him/her, an Internet-of-things (IoT) device such as a smart meter, and the like.

NR-SL is expected to support hybrid automatic repeat request (HARQ) in sidelink unicast and groupcast. In addition, sidelink feedback control information (SFCI) carrying HARQ responses is defined in NR-V2X. Furthermore, studies are underway to transmit SFCI via a physical sidelink feedback channel (PSFCH).

In the following description, the PSFCH is used to transmit HARQ-ACK in sidelink, but this is only an example. For example, a physical sidelink control channel (PSCCH) may be used to transmit HARQ-ACK in sidelink, or a physical sidelink shared channel (PSSCH) or any other channel may be used to transmit HARQ-ACK in sidelink.

Hereinafter, for ease of explanation, any or all information that a terminal 20 reports in HARQ may be generally referred to as "HARQ-ACK." HARQ-ACK may also be referred to as "HARQ-ACK information." To be more specific, a codebook, referred to as a "HARQ-ACK codebook," may be applied to HARQ-ACK information reported from a terminal 20 to a base station 10 or the like. The HARQ-ACK codebook defines bit sequences that form HARQ-ACK information. Note that "HARQ-ACK" refers not only to ACK, but also refers to NACK as well.

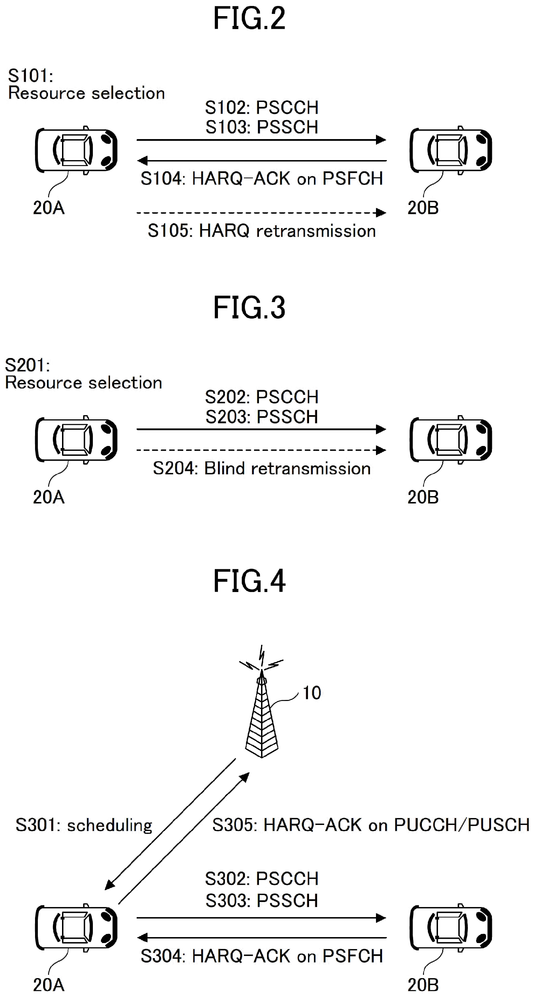

FIG. 2 is a sequence diagram showing a first example of V2X operation. As shown in FIG. 2, the wireless communication system according to the following embodiment of the present invention may include a terminal 20A and a terminal 20B. There may be more user devices, but FIG. 2 shows only a terminal 20A and a terminal 20B for ease of explanation.

Hereinafter, when the terminals 20A, 20B, and so forth are not particularly distinguished, simply the term "terminal 20" or "user device" will be used. FIG. 2 shows, for example, a case in which the terminal 20A and the terminal 20B are both located in a cell's coverage. However, the operation of the following embodiment of the present invention is still applicable even when, for example, the terminal 20B is located outside the coverage of interest.

As described above, in the following embodiment, the terminal 20 is, for example, a device mounted in a vehicle such as an automobile, and has a cellular communication function so that it works as a UE in LTE or NR, as well as a sidelink function. The terminal 20 may be a general portable terminal (such as a smartphone). The terminal 20 may also be an RSU. This RSU may be a UE-type RSU with UE functions or a gNB-type RSU with base station device functions.

Note that the terminal 20 need not be a device of a single housing. For example, when various sensors are provided in distributed positions in a vehicle, these sensors may be housed in respective terminals 20.

Furthermore, the details of sidelink transmission data processing in a terminal 20 are basically the same as in UL transmission in LTE or NR. For example, the terminal 20 scrambles and modulates transmission data's codeword, generating complex-valued symbols. The terminal 20 then maps the complex-valued symbols (transmission signal) to one layer or two layers and performs pre-coding. Then, by mapping the pre-coded complex-valued symbols to resource elements and generating a transmission signal (e.g., complex-valued, time-domain SC-FDMA signal), the terminal 20 transmits the generated signal from each antenna port.

Note that the base station 10 has a cellular communication function so that it works as a base station in LTE or NR, as well as a function to enable the terminal 20 according to this embodiment to communicate (e.g., functions related to resource pool setting, resource allocation, etc.). Furthermore, the base station 10 may be an RSU (gNB-type RSU).

In the wireless communication system according to the following embodiment of the present invention, the signal waveform that the terminal 20 uses in SL or UL may be that of OFDMA or SC-FDMA, or any other signal waveform may be used.

The terminal 20 transmits a sidelink synchronization signal block (S-SSB) as a synchronization signal in SL. The S-SSB may include a sidelink primary synchronization signal (S-PSS), a sidelink secondary synchronization signal (S-SSS), a physical sidelink broadcast channel (PSBCH), etc. Note that the names "S-SSB," "S-PSS," "S-SSS," and the like are simply examples, and other names may be used as well.

The terminal 20 transmits the S-SSB to another, second terminal 20 based on a signal from the base station device 10, a global navigation satellite system (GNSS) signal, or a signal from the second terminal 20. In case the terminal 20 is unable to transmit the S-SSB based on any of the signal from the base station device 10, the GNSS signal, or the signal from the second terminal 20, the terminal 20 may transmit an autonomously-determined S-SSB to the second terminal 20. Resources that are available for the S-SSB may be periodic slots, and may be referred to as "S-SSB occasion."

In step S101, the terminal 20A selects, autonomously, the resources to be used for the PSCCH and the PSSCH from a resource selection window, which has a predetermined duration. The resource selection window may be configured in the terminal 20 by the base station 10. Here, the predetermined duration of the resource selection window may be determined by a condition of the terminal's implementation, such as processing time, the maximum allowable packet delay time, etc., or may be determined in advance by technical specifications. The predetermined duration may be referred to as a "section in the time domain."

In step S102 and step S103, using the resources selected autonomously in step S101, the terminal 20A transmits sidelink control information (SCI) in the PSCCH and/or the PSSCH, and, additionally, transmits SL data in the PSSCH. For example, the terminal 20A may transmit the PSCCH by using resources that are the same or least partially the same as the time-domain resources for the PSSCH and that are adjacent or not adjacent to the frequency-domain resources for the PSSCH.

The terminal 20B receives the SCI (PSCCH and/or PSSCH) and the SL data (PSSCH) transmitted from the terminal 20A. The SCI received thus may include information about the PSFCH resources for allowing the terminal 20B to send an HARQ-ACK in response to the data's receipt. The terminal 20A may include information about the autonomously-selected resources in the SCI and transmit this SCI. Resources that are available for use for the PSFCH may be periodic slots, and symbols near the end of these slots (not including each slot's last symbol). These resources may be referred to as "PSFCH occasions."

In step S104, the terminal 20B transmits an HARQ-ACK in response to the received data, to the terminal 20A, using the PSFCH resources determined by the SCI received.

If the HARQ-ACK from step S104 indicates a request for a retransmission, that is, when the HARQ-ACK is a negative response (negative ACK or "NACK"), in step S105, the terminal 20A retransmits the PSCCH and the PSSCH to the terminal 20B. The terminal 20A may retransmit the PSCCH and the PSSCH using autonomously-selected resources.

In the event HARQ control with HARQ feedback is not employed, step S104 and step S105 need not be performed.

FIG. 3 is a sequence diagram showing a second example of V2X operation. A non-HARQ blind retransmission may be performed to improve the transmission success rate or the reaching distance.

In step S201, the terminal 20A autonomously selects the resources to be used for the PSCCH and the PSSCH from a resource selection window, which has a predetermined duration. The resource selection window may be configured in the terminal 20 by the base station 10.

In step S202 and step S203, using the resources selected autonomously in step S201, the terminal 20A transmits SCI in the PSCCH and/or the PSSCH, or transmits SL data in the PSSCH. For example, the terminal 20A may transmit the PSCCH by using time-domain resources that are at least partially the same as the PSSCH's time-domain resources, and frequency-domain resources that are adjacent to the PSSCH's frequency-domain resources.

In step S204, the terminal 20A retransmits the SCI in the PSCCH and/or the PSSCH and the SL data in the PSSCH, to the terminal 20B, using the resources selected autonomously in step S201. The retransmission in step S204 may be performed multiple times.

In the event blind retransmission is not employed, step S204 need not be performed.

FIG. 4 is a sequence diagram showing a third example of V2X operation. The base station 10 may control sidelink scheduling. That is, the base station 10 may select the sidelink resources to be used by the terminal 20 and transmit information indicating these resources to the terminal 20. In addition, in the event HARQ control with HARQ feedback is employed, the base station 10 may transmit information indicating PSFCH resources to the terminal 20.

In step S301, the base station 10 controls SL scheduling by sending downlink control information (DCI) to the terminal 20A in the PDCCH. For ease of explanation, DCI for SL scheduling will be hereinafter referred to as SL-scheduling DCI.

Furthermore, step S301 assumes that the base station 10 also transmits DCI for DL scheduling (which may be referred to as "DL assignment") to the terminal 20A in the PDCCH. Hereinafter, for ease of explanation, DCI for DL scheduling will be referred to as "DL-scheduling DCI." The terminal 20A, upon receiving the DL-scheduling DCI, receives DL data from the PDSCH, via the resources designated by the DL-scheduling DCI.

In step S302 and step S303, using the resources designated by the SL-scheduling DCI, the terminal 20A transmits sidelink control information (SCI) in the PSCCH and/or the PSSCH, and transmits SL data in the PSSCH. Note that PSSCH resources alone may be designated by the SL-scheduling DCI. In this case, for example, the terminal 20A may transmit the PSCCH using time-domain resources that are at least partially the same as the PSSCH's time-domain resources, and frequency-domain resources that are adjacent to the frequency-domain resources for the PSSCH.

The terminal 20B receives the SCI (PSCCH and/or PSSCH) and the SL data (PSSCH) transmitted from the terminal 20A. The SCI received via the PSCCH and/or the PSSCH includes information about the PSFCH resources that the terminal 20B can use to send an HARQ-ACK in response to the data's receipt.

The information about the resources is included in the DL-scheduling DCI or SL-scheduling DCI transmitted from the base station 10 in step S301. The terminal 20A acquires the information about the resources from the DL-scheduling DCI or the SL-scheduling DCI and includes the acquired information in SCI. Alternatively, the DCI transmitted from the base station 10 may not include the resource information; instead, the terminal 20A may autonomously include the resource information in SCI and transmit it.

In step S304, the terminal 20B transmits an HARQ-ACK for the received data to the terminal 20A using the PSFCH resources determined by the received SCI.

In step S305, the terminal 20A transmits an HARQ-ACK at, for example, a timing (for example, slot(s)) designated by the DL-scheduling DCI (or the SL-scheduling DCI), by using physical uplink control channel (PUCCH) resources designated by the DL-scheduling DCI (or the SL-scheduling DCI), and the base station 10 receives the HARQ-ACK. The HARQ-ACK codebook may include the HARQ-ACK from the terminal 20B, an HARQ-ACK generated based on a PSFCH that was not received, and an HARQ-ACK in response to the DL data. In the event there was no DL data assignment, there is no HARQ-ACK for DL data. In NR Rel. 16, the HARQ-ACK codebook includes no HARQ-ACK for DL data.

In the event HARQ control with HARQ feedback is not employed, step S304 and/or step S305 need not be performed.

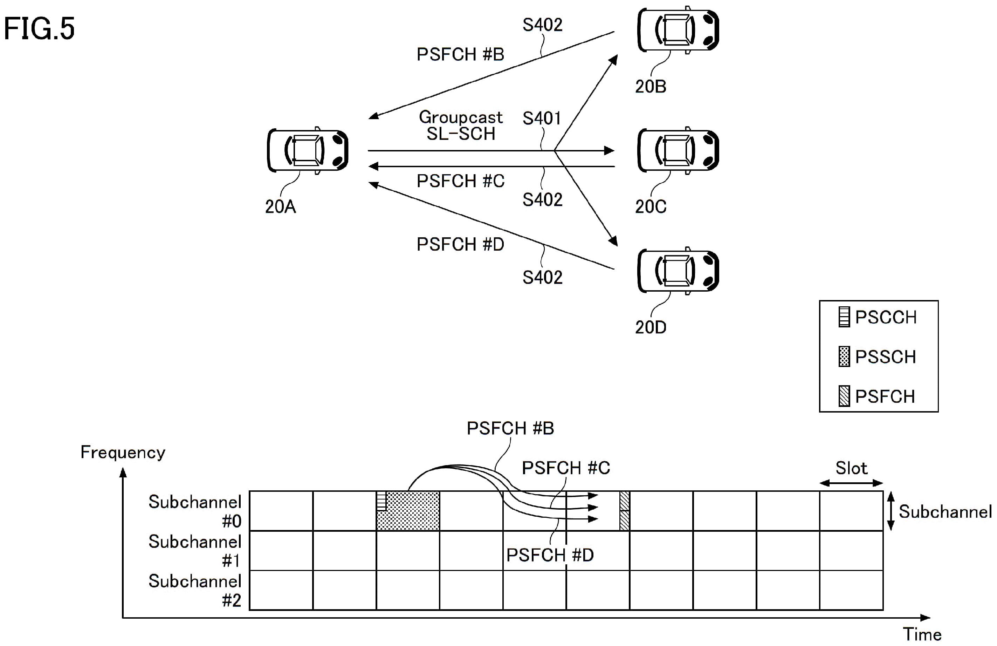

FIG. 5 is a sequence diagram showing a fourth example of V2X operation. As described above, NR sidelink supports transmitting an HARQ response in the PSFCH. As for the format of the PSFCH, for example, the same format as that of PUCCH format 0 can be used. That is, the PSFCH may adopt a sequence-based format, in which the physical resource block (PRB) size is 1, and in which an ACK and a NACK are distinguished by the sequence and/or cyclic shift. The format of the PSFCH is by no means limited to this. PSFCH resources may be located at the last symbol of a slot or multiple symbols at the end of a slot. Furthermore, a period N may be configured or defined in advance for PSFCH resources. The period N may be configured or defined in advance in units of slots.

In FIG. 5, the vertical axis is the frequency domain and the horizontal axis is the time domain. The PSCCH may be placed in the first symbol of a slot, may be placed in the first multiple symbols of a slot, or may be placed in multiple symbols beginning with a symbol other than the first symbol of a slot. The PSFCH may be placed in the last symbol of a slot or may be placed in multiple symbols at the end of a slot. Note that the "beginning of a slot" and the "end of a slot" may make it unnecessary to take into account the symbol for automatic gain control (AGC) and the symbol for switching between transmission and reception. That is, for example, in the event one slot is formed with 14 symbols, the "beginning of the slot" and the "end of the slot" may be, respectively, the first symbol and the last symbol of the 12 symbols not including the first and last symbols of the original whole slot. In the example shown in FIG. 5, three subchannels are configured in a resource pool, and two PSFCHs are placed three slots after a slot in which a PSSCH is placed. The arrows from the PSSCH to the PSFCHs indicate examples of PSFCHs associated with a PSSCH.

In the event groupcast option 2, in which an ACK or a NACK is transmitted in an HARQ response in NR-V2X groupcast, is employed, it is necessary to determine the resources for transmitting and receiving the PSFCH. As shown in FIG. 5, in step S401, the terminal 20A, which is a transmitting terminal 20, performs groupcast with respect to a terminal 20B, a terminal 20C, and a terminal 20D, which are receiving terminals 20, via a sidelink shared channel (SL-SCH). In subsequent step S402, the terminal 20B uses PSFCH #B, the terminal 20C uses PSFCH #C, and the terminal 20D uses PSFCH #D, to transmit an HARQ response to the terminal 20A. As in the example of FIG. 5, in the event the number of PSFCH resources available is less than the number of receiving terminals 20 belonging to a group of interest, how to allocate the PSFCH resources needs to be determined. The transmitting terminal 20 may know the number of receiving terminals 20 in groupcast in advance. Note that, in groupcast option 1, only NACKs are transmitted in HARQ responses, and no ACK is transmitted.

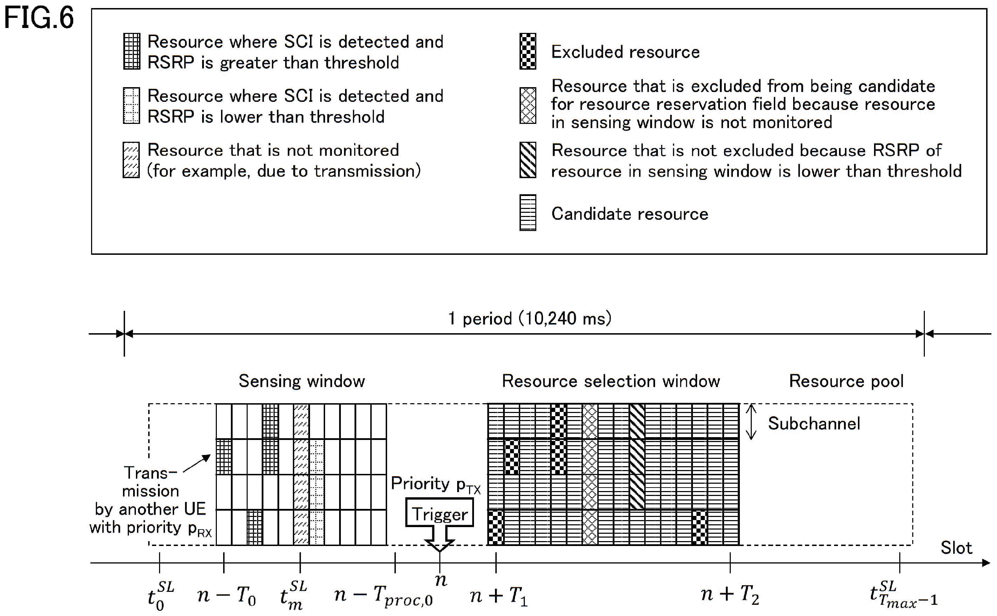

FIG. 6 is a diagram showing an example of sensing operation in NR. In resource allocation mode 2, the terminal 20 selects resources and carries out a transmission. As illustrated in FIG. 6, the terminal 20 performs sensing in a sensing window provided in a resource pool. By executing this sensing, the termina 20 receives a resource reservation field or a resource assignment field included in SCI from another terminal 20. Based on these fields, the terminal identifies candidate available resources in the resource selection window in the resource pool. Subsequently, the terminal 20 randomly selects resources from the candidate available resources.

Furthermore, as shown in FIG. 6, the configuration of the resource pool may have periodicity. For example, the resource pool may have a period of 10,240 milliseconds. FIG. 6 is an example in which the slots from a slot t₀^{SL} to a slot t_{Tmax-1}^{SL} constitute a resource pool. The resource pool in every cycle may have an area configured by, for example, a bitmap.

Furthermore, as illustrated in FIG. 6, it is assumed that a transmission from the terminal 20 is triggered in a slot n and the priority of this transmission is p_{TX}. In the sensing window from a slot n-T₀ to the slot immediately before a slot n-T_{proc,0}, the terminal 20 can detect, for example, that another terminal 20 is making a transmission with a priority p_{RX}. In the event SCI is detected in the sensing window and the reference signal received power (RSRP) exceeds a threshold, the resources corresponding to that SCI in the resource selection window are excluded. In addition, in the event SCI is detected in the sensing window and the RSRP is less than the threshold, the resources corresponding to the SCI in the resource selection window and are not excluded. The threshold may be, for example, a threshold Th_{pTX,pRX}, which is defined and configured per resource in the sensing window based on the priority p_{TX} and the priority p_{RX}.

In addition, for example, resources (for example, a slot tₘ^{SL} in FIG. 6) in the resource selection window that are not monitored due to, for example, a transmission, and that are therefore candidates of resource reservation information in the sensing window are excluded.

In the resource selection window ranging from a slot n+T₁ to a slot n+T₂, as shown in FIG. 6, resources occupied by other UEs are identified, and the resources not including these resources serve as candidates for available resource. Assuming that a set of candidate available resources is S_{A}, in the event S_{A} falls below 20% of the resource selection window, the resources may be re-identified by raising the threshold Th_{pTX},_{pRX}, which is configured per resource in the sensing window, by 3 dB. That is, by raising the threshold Th_{pTX,pRX} and identifying the resources again, resources that need not be excluded because their RSRP is below a threshold may increase in number, and the set S_{A} of candidate resources may become greater than or equal to 20% of the resource selection window. The operation of raising the threshold Th_{pTX,pRX} configured per resource in the sensing window by 3 dB and identifying the resources again when S_{A} falls below 20% of the resource selection window may be repeated.

A lower layer of the terminal 20 may report S_{A} to a higher layer. The higher layer of the terminal 20 may perform random selection for S_{A} and determine the resources to be used. The terminal 20 may carry out a sidelink transmission using the determined resources. The higher layer may be the MAC layer, for example. The lower layer may be the PHY layer or the physical layer, for example.

Although the operation of a transmitting terminal 20 has been described with reference to FIG. 6, a receiving terminal 20 may detect a data transmission from another terminal 20 based on a result of sensing or partial sensing, and receive data from the transmitting terminal 20.

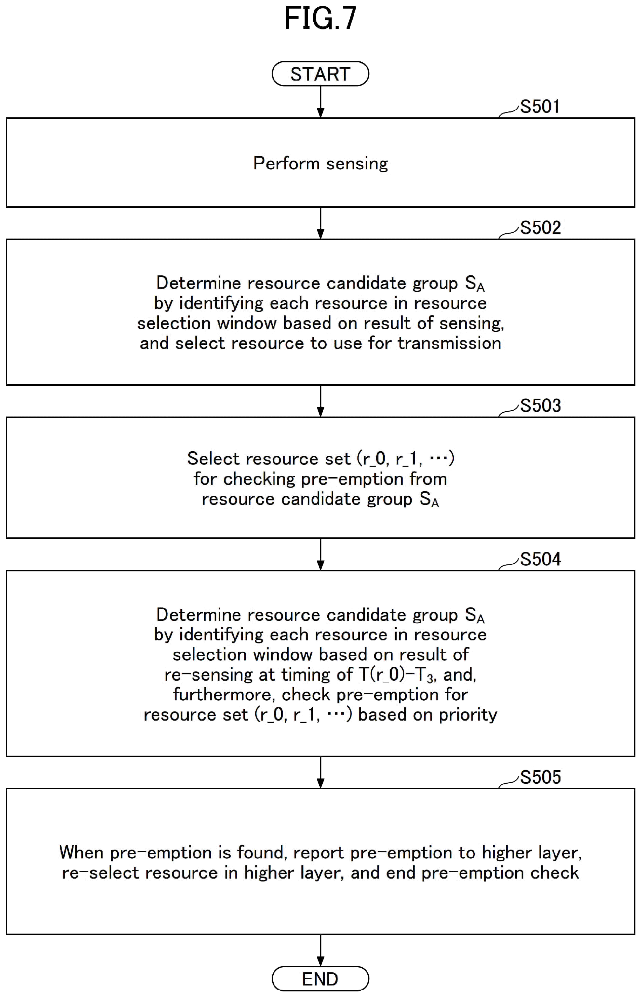

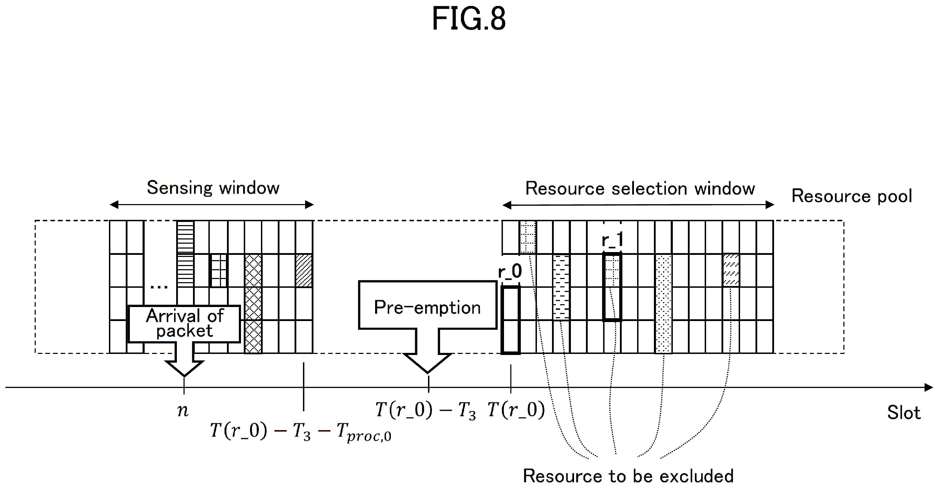

FIG. 7 is a flowchart showing an example of pre-emption in NR. FIG. 8 is a diagram showing another example of pre-emption in NR. In step S501, the terminal 20 (also referred to as "the subject terminal 20") performs sensing in the sensing window. In the event the terminal 20 operates in power-saving mode, sensing may be performed in a limited period specified in advance. Next, the terminal 20 identifies each resource in the resource selection window based on the result of sensing, determines the set S_{A} of candidate resources, and selects the resources to be used for a transmission (S502). Subsequently, the terminal 20 selects a resource set (r_0, r_1, ...) for checking pre-emption, from the set S_{A} of candidate resources (S503). The resource set may be indicated from the higher layer to the PHY layer as resources for determining whether or not pre-emption has been performed therefor.

In step S504, at the timing of T(r_0)-T₃ shown in FIG. 8, the terminal 20 identifies each resource in the resource selection window again based on the result of sensing, determines the set S_{A} of candidate resources, and determines whether the resource set (r_0, r_1, ...) has been pre-empted based on priority. For example, looking at r_1 in FIG. 8, SCI transmitted from a second terminal 20 is detected by repeated sensing, and r_1 is not included in S_{A}. In the event pre-emption is valid and the value prio_RX, which indicates the priority of SCI transmitted from the second terminal 20, is lower than the value prio_TX, which indicates the priority of a transport block to be transmitted from the subject terminal 20, the subject terminal 20 determines that the resource r_1 has been pre-empted. Note that the lower the value of priority, the higher the priority. On the other hand, when the value prio_RX indicating the priority of SCI transmitted from the second terminal 20 is higher than the value prio_TX indicating the priority of a transport block to be transmitted from the subject terminal 20, the subject terminal 20 does not exclude the resource r_1 from S_{A}. In addition, in the event pre-emption is enabled only for a particular priority (for example, sl-PreemptionEnable indicates any of pl1, pl2, ..., pl8), this priority is referred to as "prio_pre." If the value prio_RX, which indicates the priority of SCI transmitted from the second terminal 20, is lower than prio_pre, and the value prio_RX is lower than the value prio_TX, which indicates the priority of a transport block to be transmitted from the subject terminal 20, the terminal 20 determines that the resource r_1 has been pre-empted.

If pre-emption is identified in step S504, then, in step S505, the terminal 20 reports the pre-emption to the higher layer, and the resources are re-selected in the higher layer, thereupon ending the pre-emption check.

In the event "re-evaluation" replaces the pre-emption check, then, after the set S_{A} of candidate resources is determined in step S504 and yet S_{A} does not include resources from the resource set (r_0, r_1, ...), the resources are not used, and a higher layer re-selects the resources instead.

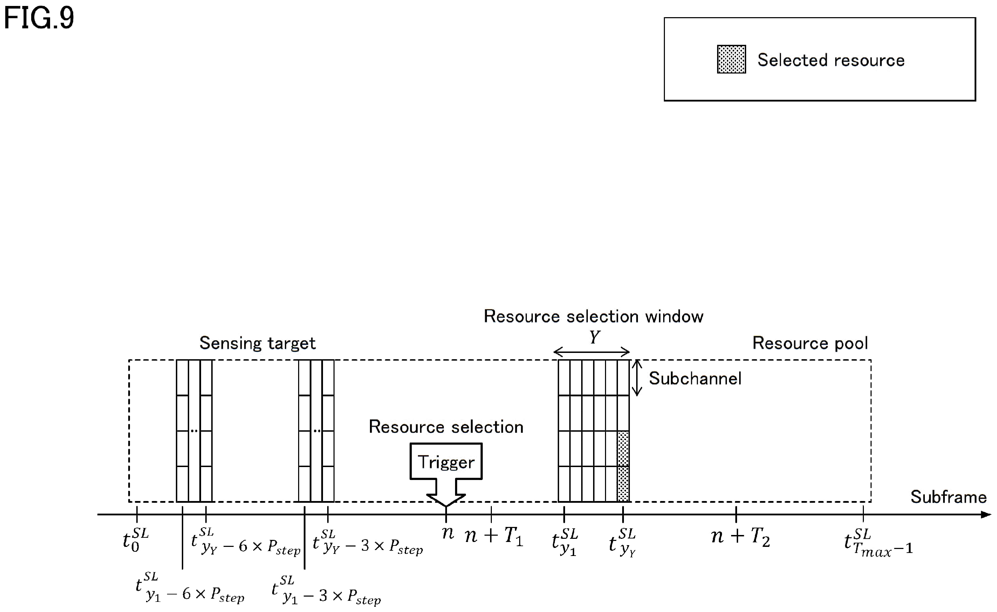

FIG. 9 is a diagram showing an example of partial sensing operation in LTE. In the event partial sensing is configured by a higher layer in LTE sidelink, the terminal 20 carries out a transmission by selecting resources as shown in FIG. 9. In FIG. 9, the terminal 20 performs partial sensing for a part of the sensing window in the resource pool, that is, a sensing target. According to partial sensing, the terminal 20 receives the resource reservation field contained in SCI transmitted from a second terminal 20, and identifies the candidate available resources in the resource selection window in the resource pool, based on the received field. Subsequently, the terminal 20 selects resources randomly from the candidate available resources.

FIG. 9 is an example in which subframes from a subframe t₀^{SL} to a subframe t_{Tmax-1}^{SL} constitute a resource pool. For the resource pool, an area of interest may be set by a bitmap, for example. As shown in FIG. 9, a transmission at the terminal 20 is triggered in a subframe n. As shown in FIG. 9, among the subframes from a subframe n+T₁ to a subframe n+T₂, Y subframes from a subframe t_{y1}^{SL} to a subframe t_{yY}^{SL} may constitute the resource selection window.

The terminal 20 can detect, for example, that a second terminal 20 is performing a transmission in one or more sensing targets from a subframe t_{y1-k×Pstep}^{SL} to a subframe t_{yY-k×Pstep}^{SL}, the length therebetween being Y subframes. k may be determined by a 10-bit bitmap, for example. FIG. 9 shows an example in which the third and sixth bits in the bitmap are configured to "1," which indicates that these bits are subject to partial sensing. That is, in FIG. 9, subframes from a subframe t_{y1-6×Pstep}^{SL} to a subframe t_{yY-6×Pstep}^{SL}, and subframes from a subframe t_{y1-3×Pstep}^{SL} to a subframe t_{yY-3×Pstep}^{SL}, are set as sensing targets. As described above, any k-th bit in the bitmap may correspond to a sensing window from a subframe t_{y1-k×Pstep}^{SL} to a subframe t_{yY-k×Pstep}^{SL}. Note that yᵢ corresponds to the index (1 ... Y) in the Y subframes.

Note that k may be configured in a 10-bit bitmap or defined in advance. Pₛₜₑₚ may be 100 ms. However, in the event SL communication is carried out using DL and UL carriers, Pₛₜₑₚ may be (U/(D+S+U))*100 ms. U is the number of UL subframes, D is the number of DL subframes, and S is the number of special subframes.

In the event SCI is detected among the above sensing targets and the RSRP exceeds a threshold, the resources located in the resource selection window and corresponding to that SCI's resource reservation field are excluded. Also, in the event SCI is detected among the sensing targets and the RSRP is less than the threshold, the resources located in the resource selection window and corresponding to that SCI's resource reservation field are not excluded. The threshold may be, for example, the threshold Th_{pTX,pRX}, which is configured or defined per resource in sensing targets based on the transmitting priority p_{TX} and the receiving priority p_{RX}.

As shown in FIG. 9, when a resource selection window spanning Y subframes is set in the section [n+T₁, n+T₂], the terminal 20 can identify the resources occupied by another UE, so that the resources not including these occupied resources serve as candidate available resources. Note that the Y subframes need not be contiguous. Assuming that candidate available resources form a set S_{A} and S_{A} is less than 20% of the resource selection window, the resources may be re-identified by raising the threshold Th_{pTX,pRX} set for each sensing target resource by 3 dB.

That is, resources that need not be excluded because their RSRP is less than a threshold may increase in number by raising the threshold Th_{pTX,pRX} and identifying the resources again. In addition, the RSSI of each resource in S_{A} may be measured and the resource with the lowest RSSI may be added to a set S_{B}. The operation of adding the resource with the lowest RSSI in S_{A} to S_{B} may be repeated until the set S_{B} of candidate resources becomes greater than or equal to 20% of the resource selection window.

A lower layer of the terminal 20 may report S_{B} to a higher layer. The higher layer of the terminal 20 may perform random selection for S_{B} and determine the resources for use. The terminal 20 may carry out a sidelink transmission using the determined resources. Once resources are secured thus, the terminal 20 may keep using these resources a predetermined number of times (e.g., Cᵣₑₛₑₗ times) without performing sensing again.

In NR sidelink, power saving based on random resource selection and partial sensing is standardized. A terminal 20, to which partial sensing is applied, receives signals/data and performs sensing only with respect to specific slots in the sensing window. That is, unlike full sensing, the terminal 20 may perform partial sensing, in which only limited resources are subject to sensing and identified, and in which resources are selected from the thus-identified resource set. Furthermore, the terminal 20 need not exclude resources from the resource selection window. Instead, the terminal 20 may perform random selection such that a resource set is formed with identified resources in the resource selection window, and resources are selected from the resource set identified thus.

Note that a method of selecting resources randomly upon resource selection and using sensing information upon re-evaluation or pre-emption check may be employed as partial sensing or random selection.

The following (1) and (2) may be used as sensing operations. Note that "sensing" and "monitoring" may be used interchangeably herein, and its operation may include at least one of: measuring received RSRP; acquiring reserved resource information; and acquiring priority information.
(1) Periodic-based partial sensing This is an operation which involves a mechanism for performing sensing only with respect to part of the slots, and in which sensing slots are determined based on reservation periodicity. The reservation periodicity is a value related to the resource reservation period field. Note that "period" and "periodicity" may be interchangeable.
(2) Contiguous partial sensing This is an operation which involves a mechanism for performing sensing only with respect to part of the slots, and in which sensing slots are determined based on aperiodic reservation. In aperiodic reservation, values that relate to the time resource assignment field are used.

In addition, multiple resource allocation methods may be configured for one resource pool. For example, sidelink discontinuous reception (SL-DRX) may be supported as one power saving function. That is, the receiving operation is carried out only in predetermined time periods.

As described above, partial sensing is supported as one power saving function. In a resource pool in which partial sensing is configured, the terminal 20 may perform periodic-based partial sensing as described above. The terminal 20 may receive, from the base station 10, information for configuring a resource pool in which partial sensing is configured and in which periodic reservation is enabled.

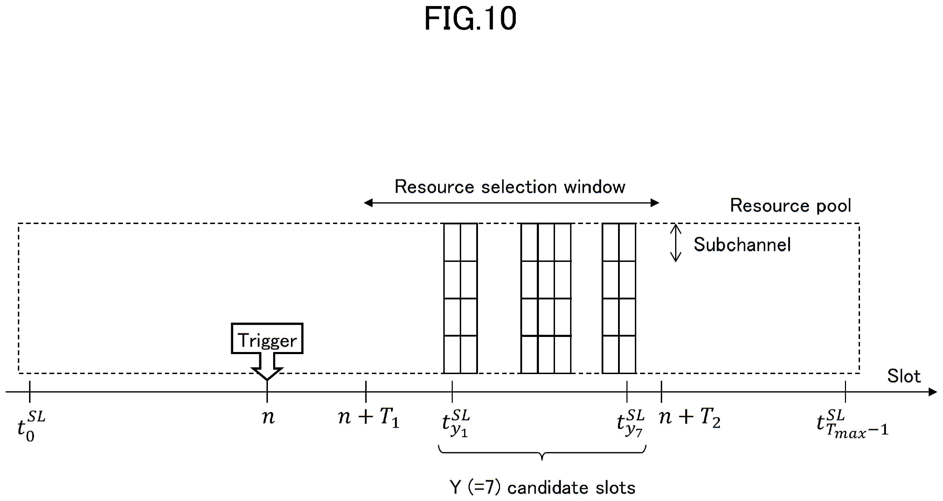

FIG. 10 is a diagram for explaining an example of periodic-based partial sensing. As shown in FIG. 10, Y candidate slots for resource selection are selected from a resource selection window [n+T₁, n+T₂].

Assuming that t_{y}^{SL} is one slot among Y candidate slots, sensing may be performed by making t_{y-k×Preserve}^{SL} a target slot for periodic-based partial sensing.

Pᵣₑₛₑᵣᵥₑ may correspond to any value included in a set "sl-ResourceReservePeriodList," which is configured or defined in advance. Alternatively, the value of Pᵣₑₛₑᵣᵥₑ, which is limited by a subset of sl-ResourceReservePeriodList, may be configured or defined in advance. Pᵣₑₛₑᵣᵥₑ and sl-ResourceReservePeriodList may be configured per transmission resource pool in resource allocation mode 2. In addition, upon UE implementation, a period included in sl-ResourceReservePeriodList other than a limited subset may be monitored. For example, the terminal 20 may additionally monitor an occasion corresponding to P_RSVP_Tx.

Regarding the value of k, the terminal 20 may monitor the latest sensing occasion in a certain reservation period before the selection of resources is triggered in slot n, or before the first slot among the Y candidate slots that are subject to the limitation of processing time. The terminal 20 may additionally monitor periodic sensing occasions that correspond to a set of one or more k values. For example, for these k values, a value that corresponds to the latest sensing occasion in a certain reservation period before the resource-selection triggering slot n, or before the first slot among the Y candidate slots subject to processing time limitation, and a value that corresponds to the sensing occasion immediately before the latest sensing occasion in the above certain reservation period may be configured.

As described above, partial sensing is supported as one power saving function. In a resource pool where partial sensing is configured, the terminal 20 may perform contiguous partial sensing as will be described above. The terminal 20 may receive, from the base station 10, information for configuring a resource pool in which partial sensing is configured and aperiodic reservation is enabled.

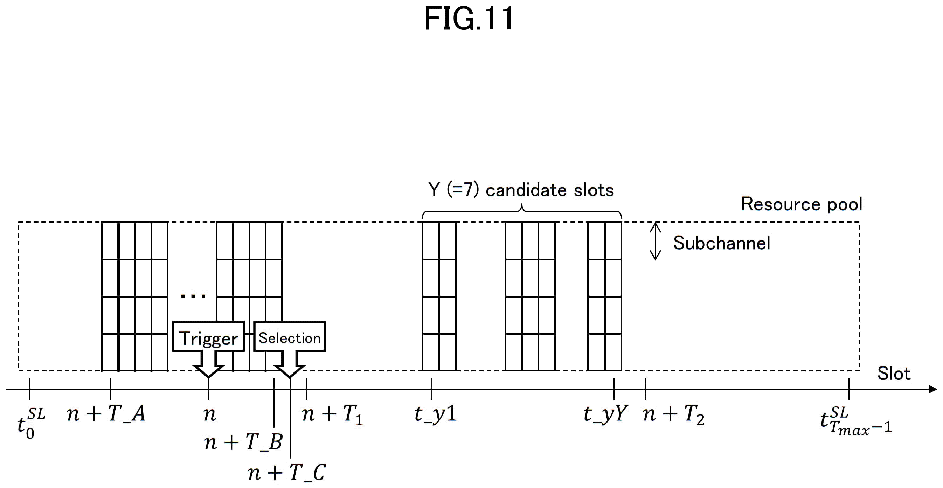

FIG. 11 is a diagram for explaining an example of contiguous partial sensing. As shown in FIG. 11, when resource selection is triggered in a slot n, the terminal 20 selects Y candidate slots for resource selection from a resource selection window [n+T₁, n+T₂]. FIG. 11 shows an example in which Y is 7. As shown in FIG. 11, the beginning of Y candidate slots is a slot "t_{y1}," the next slot is "t_{y2}," and so on, and the last one of the Y candidate slots is "t_{yY}."

The terminal 20 performs sensing in a section [n+T_{A}, n+T_{B}] and selects resources at n+T_{B} or after n+T_{B} (at "n+T_{C}," for example). The above periodic-based partial sensing may be additionally performed here. Note that "T_{A}" and "T_{B}" in the section [n+T_{A}, n+T_{B}] may have any value. Also, "n" may be replaced with the index of one slot among the Y candidate slots.

Also, the symbol "[" may be replaced with the symbol "(", and the symbol "]" may be replaced with the symbol ")". For example, a section [a, b] is the interval between a slot a and a slot b, inclusive. Conversely, a section (a, b) is the interval between slot a and slot b, not inclusive.

Although the candidate resources that are subject to resource selection will be referred to as "Y candidate slots" here, all the slots in the section [n+T₁, n+T₂] may be candidate slots, or only part of the slots may be candidate slots.

Standardization of inter-terminal coordination is in progress as a technique to allow for improved reliability and improved delay performance. For example, the following first and second inter-terminal coordination methods are being standardized. In the following description, a terminal 20A, which transmits coordination information, will be referred to as a "UE-A," and a terminal 20B, which receives the coordination information, will be referred to as a "UE-B."

### (First inter-terminal coordination method)

To allow UE-B to carry out a transmission, a preferred resource set and/or a non-preferred resource set is transmitted from UE-A to UE-B. Hereinafter, the first inter-terminal coordination method will also be referred to as a "first inter-UE coordination scheme" (or "IUC scheme 1").

### (Second inter-terminal coordination method)

UE-A receives, from UE-B, SCI that designates resources. UE-A transmits, to UE-B, information that indicates resources where collisions with other transmissions or receipts are predictable and/or have been detected, among the resources designated by the SCI received from UE-B. This information may be transmitted in the PSFCH. Hereinafter, the second inter-terminal coordination method will be also referred to as a "second inter-UE coordination scheme" (or "IUC scheme 2").

3GPP Release 16 or Release 17 sidelink is standardized on the assumption of the following (1) and (2):

(1) An environment in which only 3GPP terminals exist in an intelligent transport system (ITS) band.
(2) An environment in which UL resources are available for use in SL in licensed bands of a frequency range 1 ("FR1") and a frequency range 2 ("FR2") defined in NR.

In sidelink according to 3GPP Release 18 or later releases, new use of unlicensed bands is under study. These unlicensed bands are, for example, the 5 GHz to 7 GHz band, the 60 GHz band, and so forth.

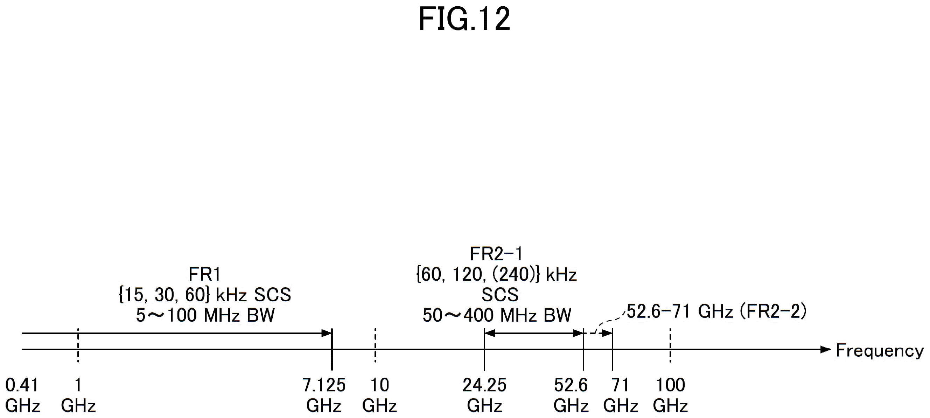

FIG. 12 shows examples of frequency bands to be used in a wireless communication system. In the technical specifications of NR of 3GPP Release 15 and Release 16, for example, 52.6 GHz or higher frequency bands are studied for operation. Note that, as shown in FIG. 2, the frequency range (FR) 1 specified for operation at present is a frequency band between 410 MHz and 7.125 GHz, inclusive, where the subcarrier spacing (SCS) is 15 kHz, 30 kHz, or 60 kHz, and the bandwidth ranges from 5 MHz to 100 MHz.

FR2-1 is a frequency band between 24.25 GHz and 52.6 GHz, inclusive, where the SCS is 60 kHz, 120 kHz or 240 kHz, and the bandwidth ranges from 50 MHz to 400 MHz. As shown in FIG. 12, for example, FR2-2 may range from 52.6 GHz to 71 GHz. Furthermore, supporting frequency bands beyond 71 GHz is predictable.

When using bands beyond 52.6 GHz, cyclic prefix-orthogonal frequency division multiplexing (CP-OFDM)/discrete Fourier transform-spread OFDM (DFT-S-OFDM) with larger subcarrier spacing (SCS) may be applied.

Also, in high frequency bands such as FR2-2, increased phase noise between carriers is an issue. Consequently, it may be necessary to apply larger (wider) SCS or a single-carrier waveform.

Examples of unlicensed bands in the 5 GHz to 7 GHz band include one from 5.15 GHz to 5.35 GHz, one from 5.47 GHz to 5.725 GHz, one from 5.925 GHz or higher, and so forth.

Examples of unlicensed bands in the 60 GHz band include one from 59 GHz to 66 GHz, one from 57 GHz to 64 GHz or 66 GHz, one from 59.4 GHz to 62.9 GHz, and so forth.

In unlicensed bands, various regulations are set forth in order not to affect other systems or other devices.

For example, listen-before-talk (LBT) is performed when accessing a channel in the 5 GHz to 7 GHz band. The base station 10 or the terminal 20 performs power detection in a predetermined period shortly before a transmission is carried out, and cancels the transmission if power exceeding a certain value is detected, that is, if another device's transmission is detected, for example (this event may be referred to as an "LBT failure"). In addition, the maximum channel occupancy time (MCOT) is specified. The MCOT is the maximum period of time a transmission that is started after LBT is performed is allowed to continue; for example, it is 4 ms in Japan.

In addition, there is an occupied channel bandwidth (OCB) requirement that sets forth that, when using a certain carrier bandwidth for a transmission, X% or more of the band needs to be used. For example, in Europe, 80% to 100% of a nominal channel bandwidth (NCB) needs to be used. The OCB requirement is intended to ensure proper power detection upon channel access.

As for the maximum transmission power and the maximum power spectral density, it is set forth that a transmission be carried out with predetermined transmission power or less. For example, in Europe, 23 dBm is the maximum transmission power in the band from 5,150 MHz to 5,350 MHz. In addition, for example, in Europe, the maximum power spectral density is 10 dBm/MHz in the band from 5,150 MHz to 5,350 MHz.

For example, LBT is performed when accessing a channel in the 60 GHz band. The base station 10 or the terminal 20 performs power detection in a predetermined period shortly before a transmission. If power beyond a certain value is detected, that is, if, for example, another device's transmission is detected, the base station 10 or the terminal 20 cancels the transmission. As for the maximum transmission power and the maximum power spectral density, it is set forth that a transmission be carried out with predetermined transmission power or less. It is also set forth that the base station 10 or the terminal 20 must have capabilities that satisfy the OCB requirement.

In NR, the following four types of channel access procedures are defined based on the variation in LBT's behavior in time (that is, the variation in the time duration of sensing). Note that the following sensing is a different operation from the sensing for sidelink communication described hereinabove and will be referred to as "LBT sensing" for distinction.

Type 1: Time-variable LBT sensing is performed before a transmission is made. Type 1 is also referred to as "category 4 LBT."

Type 2A: 25-µs LBT sensing is performed before a transmission is made. Type 2A is also referred to as "category-2 LBT."

Type 2B: 16-µs sensing is performed before a transmission is made. Type 2B is also referred to as "category 2 LBT."

Type 2C: A transmission is started without performing LBT sensing. Type 2C is the same as transmissions in licensed bands.

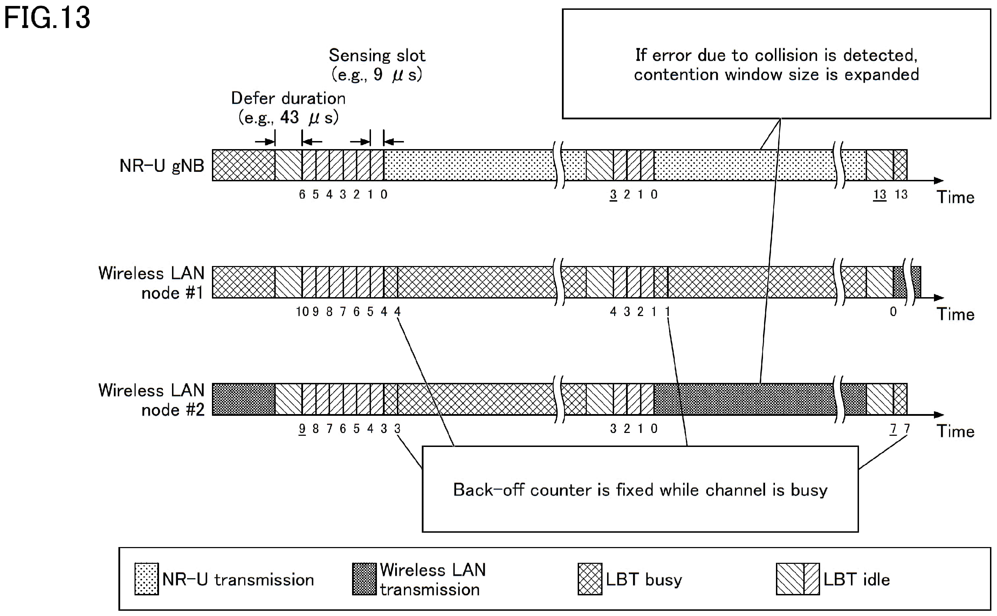

FIG. 13 is a diagram showing a first example of LBT. FIG. 13 shows an example of type 1 channel access procedures. Type 1 is further classified into four sub-classes, each indicating a different channel access priority class (CAPC), based on the difference in the duration of LBT sensing. LBT sensing is performed in the following two durations.

The first period is a prioritization period or a defer duration and is 16+9×mₚ [µs] long. mₚ is a fixed value and provided for each channel access priority class.

The second period is a back-off procedure and is 9×N [µs] long. The value of N is randomly determined from a certain range (see, for example, the CWS adjustment procedure in Non-Patent Document 4). N is the initial value on a back-off counter. The value on the back-off counter decreases by one every time 9 µs elapses without detecting signal power from other devices.

The above 9-µs LBT sensing period may be referred to as a "LBT sensing slot period."

In the example of FIG. 13, mₚ is 3, and the defer duration is 43 µs. As illustrated in FIG. 13, the back-off counter is fixed while a channel is busy. Furthermore, as illustrated in FIG. 13, if a transmission from an NR-U gNB and a transmission from a wireless LAN node #2 collide with each other and an error is detected, the contention window size (CWS) expands from 3 to 13 in the NR-U gNB.

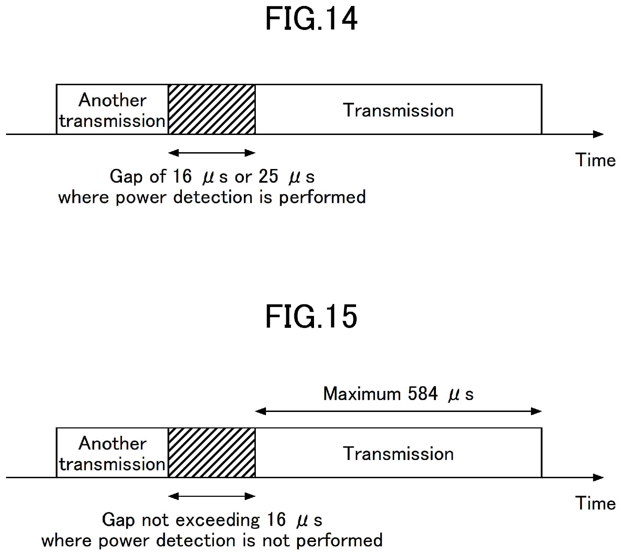

FIG. 14 is a diagram showing a second example of LBT. FIG. 14 is an example of type 2A or type 2B channel access procedures without random back-off. A gap for performing power detection is booked before a transmission. The gap is 25-µs long in type 2A or 16-µs long in type 2B.

FIG. 15 is a diagram showing a third example of LBT. FIG. 15 is an example of type 2C channel access procedures. Referring to FIG. 15, no power detection is performed before a transmission. After a gap not exceeding 16 µs elapses, the transmission is carried out promptly.
The transmission period may be 584 µs at a maximum.

As mentioned earlier, multiple types of LBT are supported in NR-U. In above type 1, for the initial value N of the back-off counter, a random number is selected from the range from 0 to CWₚ; the range of values for CWₚ is determined based on a channel access priority class p. Table 1 below shows examples of: mₚ, which is specified per channel access priority class p in UL; the minimum value CW_{p,min} of CWₚ; and the maximum value CW_{p,max} of CWₚ.

**[Table 1]**

| Class p | mₚ | CW_{min, p} | CW_{max, p} |
|---|---|---|---|
| 1 | 2 | 3 | 7 |
| 2 | 2 | 7 | 15 |
| 3 | 3 | 15 | 1023 |
| 4 | 7 | 15 | 1023 |

As shown in Table 1, mₚ, CW_{p,min}, and CW_{p,max} are determined based on the channel access priority class p. If p is 1, according to Table 1, the LBT period is calculated to be 34 µs at a minimum and 88 µs at a maximum. If p is 2, according to Table 1, the LBT period is calculated to be 34 µs at a minimum and 160 µs at a maximum. If p is 3, according to Table 1, the LBT period is calculated to be 43 µs at a minimum and 9,286 µs at a maximum. If p is 4, according to Table 1, the LBT period is calculated to be 79 µs at a minimum and 9,286 µs at a maximum. Table 1 is used for UL.

The LBT type and the channel access priority class may be determined based on an indication from the base station 10, the channel type, and so forth. The 25-µs or 16-µs gap may be configured by the base station 10's scheduling, taking into account timing advance (TA) and CP extension.

LBT, which is applied to channel access, is performed for each predetermined bandwidth (e.g., 20 MHz). If no power is detected in an LBT channel where various transmissions may be included, a transmission can be carried out. On the other hand, each CC in Uu can be defined with a bandwidth wider than the LBT channel. In other words, wideband operation is supported. Note that Uu refers to the wireless interface between the universal terrestrial radio access network (UTRAN) and the user equipment (UE).

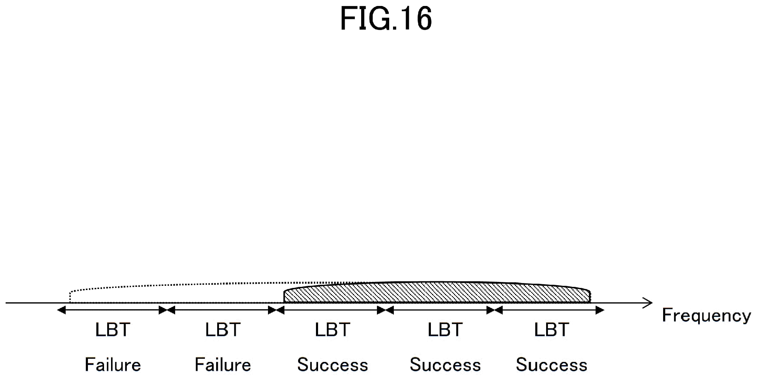

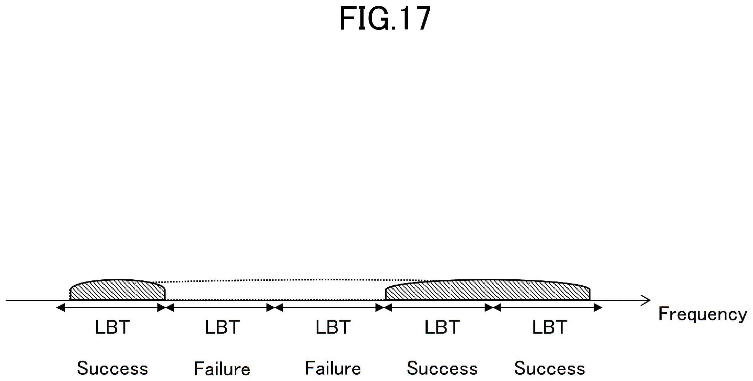

FIG. 16 is a diagram for explaining a first example of wideband operation. FIG. 17 is a diagram for explaining a second example of wideband operation. As shown in FIG. 16 or FIG. 17, in the event wideband operation is adopted in an unlicensed band and LBT in a gNB succeeds with respect to some or all of the LBT channels, a transmission may be permitted in the LBT channels where LBT succeeded. In FIG. 16, the gNB may transmit a single continuous block. In FIG. 17, the gNB may transmit multiple non-consecutive blocks.

For DL in unlicensed bands, DL type A and DL type B are defined. In DL type A, LBT is performed per channel. In DL type B, LBT type 1 is performed with respect to randomly-selected channels, and LBT type 2A is performed with respect to the rest of the channels.

DL type A is further classified into a type A1 and a type A2. In type A1, a contention window CWp is determined per channel. In type A2, the maximum CWp among the respective, channel-specific values of CWp is used.

DL type B is further classified into a type B1 and a type B2. In type B1, a single CWp is applied to all channels. In type B2, the maximum CWp among the respective, channel-specific values of CWp is used.

If LBT is successful with respect to some or all of the LBT channels at a gNB, PDSCH transmission is allowed in the LBT channels where LBT succeeded. The gNB may transmit a single block that extends continuously in the frequency direction or transmit multiple blocks that are non-consecutive in the frequency direction.

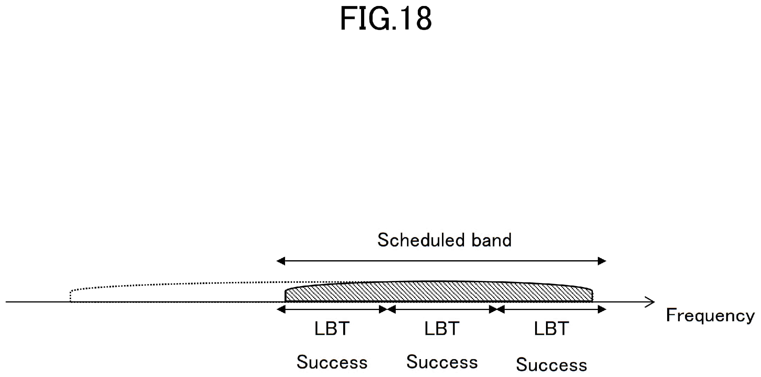

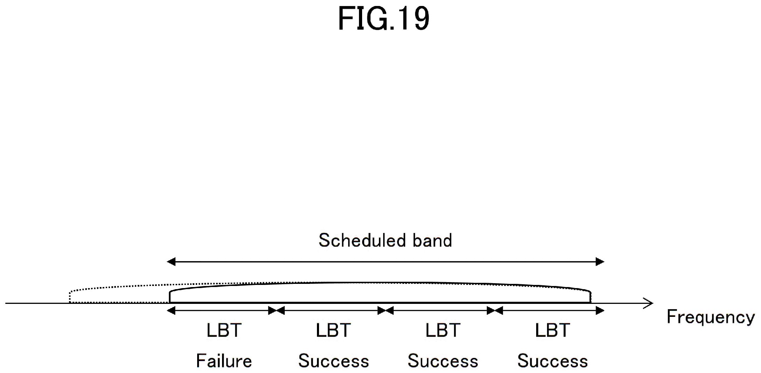

FIG. 18 is a diagram for explaining a third example of wideband operation. FIG. 19 is a diagram for explaining a fourth example of wideband operation. As shown in FIG. 18 or FIG. 19, transmission may be allowed when LBT in the UE succeeds with respect to all LBT channels in a scheduled band. As shown in FIG. 19, if LBT fails in some of the LBT channels, transmission may not be allowed.

For UL in unlicensed bands, the LBT type is determined by a command from the gNB. If LBT type 1 is ordered and LBT is performed shortly before a UL transmission in the same way as in DL type B, LBT type 2 or LBT type 1 is applied. If LBT fails with respect to any one of the LBT channels for a UL transmission, the UL transmission is not carried out in any of the LBT channels. Note that an LBT channel may also be referred to as an "RB set." The terms "LBT channel" and "RB set" may be interchangeable.

The following mechanisms 1 and 2 are being studied as enhancement mechanisms for use in resource allocation mode 2.

### (Mechanism 1)

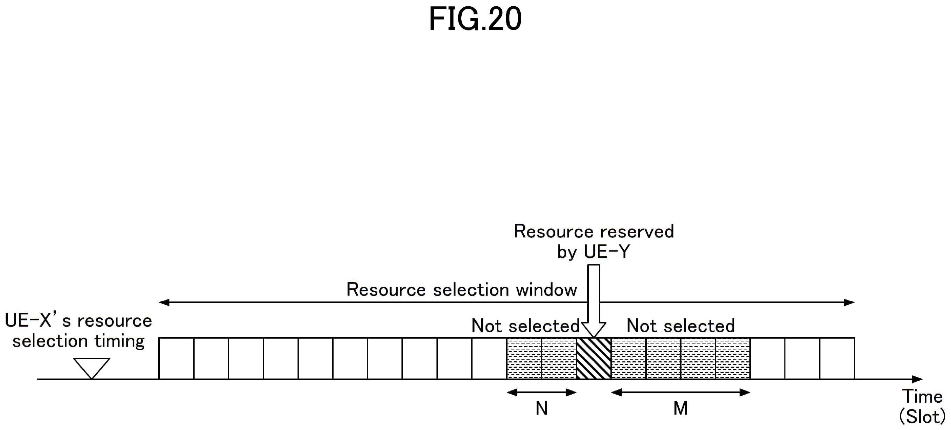

FIG. 20 is a diagram for explaining a first example of resource selection according to an embodiment of the present invention. As shown in FIG. 20, when a UE-X detects resource reservation information for a UE-Y, UE-X avoids selecting N consecutive resources that precede UE-Y's resources in the time domain as well as M consecutive resources that follow UE-Y's resources in the time domain. This operation of avoiding selecting certain resources takes place in the MAC layer. N may be one selected from {0, 1, 2,} or may be determined by the UE's mode of implementation. M may be determined by the UE's mode of implementation.

UE-X may thus select resources other than: the resources reserved by UE-Y; N consecutive resources that precede the resources reserved by UE-Y in the time domain; and M consecutive resources that follow the resources reserved by UE-Y in the time domain. UE-X may then perform LBT for the selected resources and carry out a transmission using the selected resources.

### (Mechanism 2)

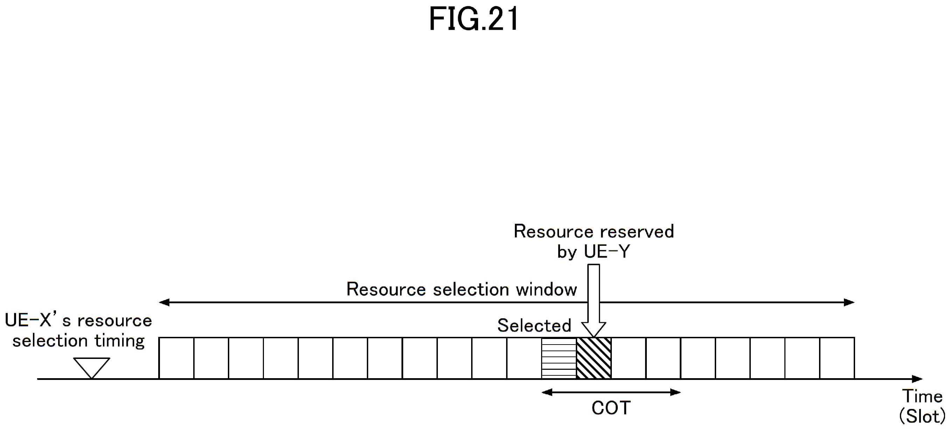

FIG. 21 is a diagram for explaining a second example of resource selection according to an embodiment of the present invention. As shown in FIG. 21, when UE-X detects resource reservation information for UE-Y, if UE-X can have a COT before UE-Y's resources in the time domain and carry out a transmission therein, and, in doing so, UE-Y's transmission can be included in UE-X's COT, UE-X preferentially selects resources that precede UE-Y's resources in the time domain. UE-X performs type 1 LBT to acquire a COT and carries out a transmission using the selected resources. UE-Y performs type 2 LBT and carries out a transmission using the reserved resources in the COT.

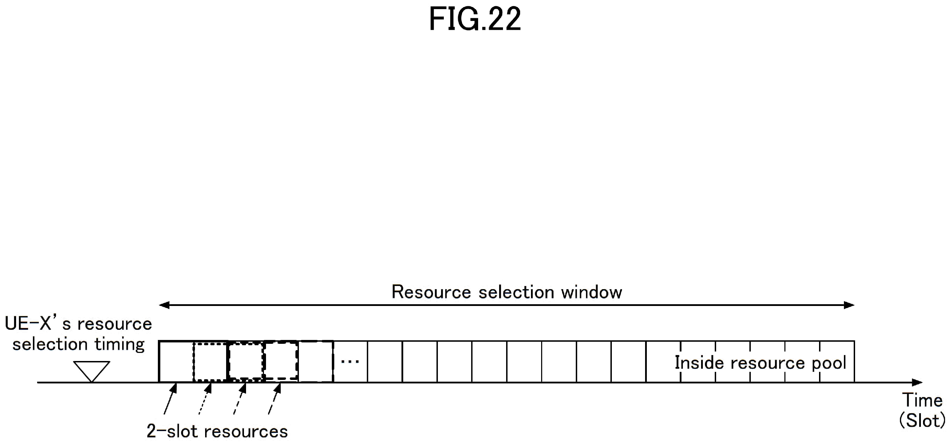

FIG. 22 is a diagram for explaining multi-consecutive-slot transmission (MCSt) according to an embodiment of the present invention. In MCSt, resources are selected as follows:
(1) The MAC layer reports the number of consecutive slots, K, to the PHY layer, and requests candidate resource identification information (candidate resource IDs) of consecutive slots.
(2) The PHY layer defines resources in units of K slots, excludes and identifies the resources based on this definition, and reports candidate resources, in units of K slots, to the MAC layer.
(3) The MAC layer selects resources from the resources reported thereto in units of K slots. All the slots constituting the selected resources may be used.

FIG. 22 shows an example where K is 2. As shown in FIG. 22, resources are defined in units of two slots.

To avoid LBT failures in mechanism 1 above, when one UE detects resource reservation information pertaining to another, second UE, the first UE operates so as not to select resources from specific sections before or after resources reserved for the second UE in the time domain. However, when resources are defined in units of a predetermined number of consecutive slots, it is not clear how to determine these specific sections.

Therefore, when employing mechanism 1 described above, the resources included in the N consecutive resources and M consecutive resources may have a predetermined length L or may be formed in a predetermined length L. The predetermined length L may be determined as in following (1) to (7):
(1) The UE may determine the predetermined length L based on the number of consecutive slots, K, in MCSt. That is, K is reported from the MAC layer to the PHY layer and applied when identifying resources in the PHY layer. For example, L and K may be the same (L = K). For example, L may be determined based on different methods for each priority.

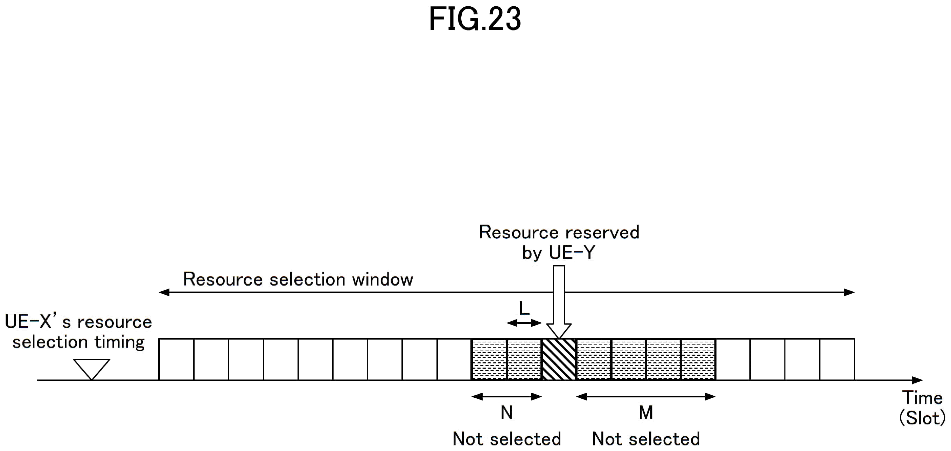

FIG. 23 is a diagram for explaining a first example of transmission according to an embodiment of the present invention. FIG. 23 shows an example where N = 2, M = 4, K = 1, and L = 1. Referring to FIG. 23, UE-X may operate such that it does not select the N × L resources (i.e., two resources) that constitute the section preceding the resource reserved by UE-Y in the time domain or select the M × L resources (i.e., four resources) that constitute the section following UE-Y's resource in the time domain.

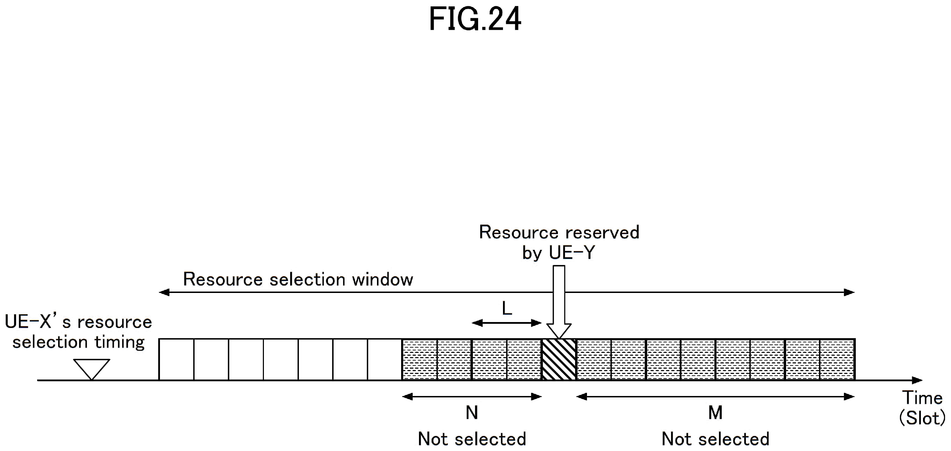

FIG. 24 is a diagram for explaining a second example of transmission according to an embodiment of the present invention. FIG. 24 shows an example where N = 2, M = 4, K = 2, and L = 2. Referring to FIG. 24, UE-X may operate such that it does not select the N × L resources (i.e., four resources) that constitute the section preceding the resource reserved by UE-Y in the time domain, or select the M × L resources (i.e., eight resources) that constitute the section following UE-Y's resource in the time domain.

(2) The UE may determine the predetermined length L based on the number of consecutive slots, Kb, which serves as the unit of resource selection in the MAC layer. For example, L and Kb may be the same (L = Kb). The predetermined length L may be determined independently of the number of consecutive slots, K. For example, L may be determined using different determination methods per priority.

(3) The UE may always determine the predetermined length L based on a predetermined number of consecutive slots, Kc. For example, L and Kc may be the same (L = Kc). Kc may be 1. The predetermined length L may be determined independently of whether or not MCSt is employed.
For example, Kc may have a different value per priority. Kc may be configured or defined in advance, or may be defined in the technical specifications. Kc may be configured or defined in advance for each priority, or may be defined in the technical specifications.

(4) The UE may determine the predetermined length L based on UE-Y's reservation information. For example, if three consecutive slots are reserved for UE-Y, the predetermined length L may be 3.

(5) The predetermined length L may be determined using different methods for N and M. The predetermined length L may be determined for only N or only M by using any of the above-described methods. Any of the methods (1) to (4) may be used.

(6) Referring back to the methods described above, when the predetermined length L is determined by using a different method for each priority, the priority may be CAPC, L1 priority, or L2 priority. The priority may be the priority of UE-X's transmission or the priority of UE-Y's transmission. Any of the methods (1) to (4) described above may be used.

(7) The predetermined length L may be determined by applying different methods depending on SCS. The predetermined length L may be determined based on SCS.

The above-described operations allow the UE to identify the resources that need to be exempt from the selecting of resources. The methods (1) and (2) are optimal when operated in accordance with MCSt.
In the method (3) above, the operation can be made common for when MCSt is employed and when MCSt is not employed.

Although the above embodiment has been described to adopt the structures and configurations of existing SL channels and SL signals, this is by no means a limitation. For example, this embodiment may be applied when an interlaced channel is applied as a structure and configuration for satisfying the OCB requirement.

The above embodiment may be applied only when a predetermined condition is satisfied. For example, the above-described embodiment may be applied in relationship to specific SL channels or SL signals. The above embodiment may be applied to any of the PSCCH/PSSCH, PSFCH, S-SSB, and SL positioning RS. The above embodiment may be applied based on a predetermined configuration or a pre-configuration. Furthermore, the above embodiment may be applied when a configuration or a re-configuration to "enable" this embodiment in a resource pool is provided. For example, if the method of LBT for a second SL transmission is not or is no longer type 1, the above embodiment need not be applied.

In order to employ LBT type 2A, 2B, or 2C, an additional transmission (additional TX) or the like may be carried out immediately before a transmission P is made. For example, CP extension may be used.

UE capabilities that relate to the applicability/inapplicability and operation of the above embodiment may be defined, and may or may not be reported to the base station 10 or the termina 20.

Note that the UE's SL transmission may use any of the PSCCH, PSSCH, PSFCH, S-SSB, and SL-PRS, and different channels or signals may be applied to each different operation in the above embodiment.

Note that at least one SL transmission by the UE may be UL transmission.

This embodiment may be applied to any of resource selection, resource re-selection, reevaluation, and pre-emption check.

Note that the technique according to the above-described embodiment of the present invention is by no means limited to cases of terminal-to-terminal direct communication described hereinabove, and may be applied to other similar cases as well.

The above-described embodiment is by no means limited to V2X terminals and may be applied to any terminal that performs D2D communication.

According to the above embodiment, when MCSt is employed, the UE can clearly identify the resources it should not select, based on resource reservation by other UEs.

In other words, the likelihood of LBT failures in unlicensed bands can be reduced.

### (Device Structure)

Next, example functional structures of the base station 10 and the terminal 20 that execute the processes and operations described above will be described below. The base station 10 and the terminal 20 have functions to implementing the above-described embodiment. However, the base station 10 and the terminal 20 may have only part of the functions described with the above embodiment.

### <Base Station 10>

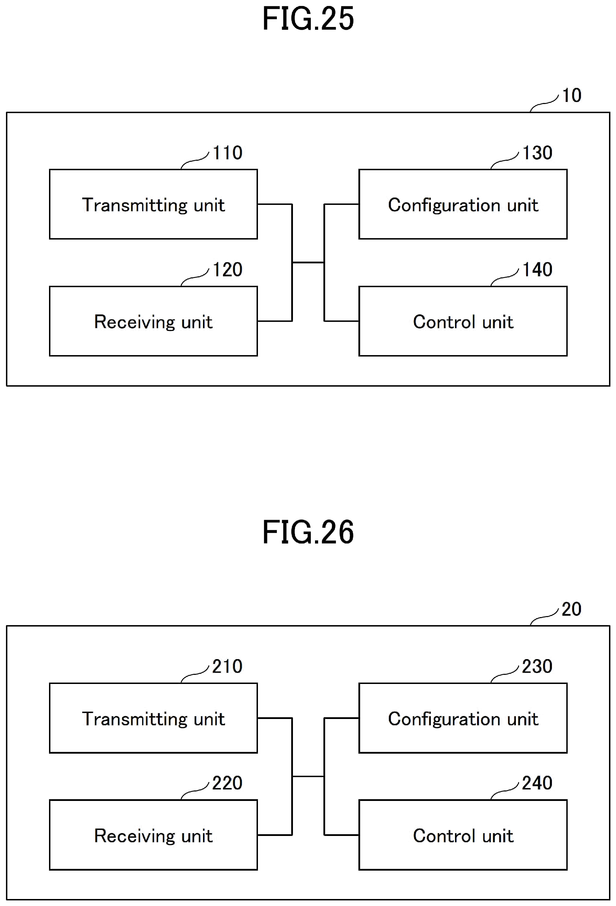

FIG. 25 is a diagram showing an example of a functional structure of the base station 10. As illustrated in FIG. 25, the base station 10 includes a transmitting unit 110, a receiving unit 120, a configuration unit 130, and a control unit 140. The functional structure illustrated in FIG. 25 is only an example. As long as the embodiment of the present invention operate as described above, any functional classifications and any names of functional units may be used.

The transmitting unit 110 has a function to generate a signal to be transmitted to the terminal 20 and transmit the signal via a wireless connection. The receiving unit 120 has a function to receive various signals from the terminal 20 and acquire, for example, higher layer information from the received signals. In addition, the transmitting unit 110 has a function to transmit an NR-PSS, an NR-SSS, an NR-PBCH, a DL/UL control signal, a DL reference signal, and the like, to the terminal 20.

The configuration unit 130 stores setting information configured in advance and various types of setting information to be transmitted to the terminal 20, in a storage device, and reads the setting information from the storage device on an as-needed basis. The contents of the setting information include, for example, information related to D2D communication settings.

As described in the embodiment, the control unit 140 performs processes related to the settings for allowing the terminal 20 to operate in D2D communication. Furthermore, the control unit 140 transmits the schedules of D2D communication and DL communication to the terminal 20 via the transmitting unit 110. Furthermore, the control unit 140 receives information related to HARQ responses in D2D communication and DL communication from the terminal 20 via the receiving unit 120. The functional unit related to signal transmission in the control unit 140 may be included in the transmitting unit 110, and the functional unit related to signal reception in the control unit 140 may be included in the receiving unit 120.

### <Terminal 20>

FIG. 26 is a diagram showing an example of a functional structure of the terminal 20. As illustrated in FIG. 26, the terminal 20 includes a transmitting unit 210, a receiving unit 220, a configuration unit 230, and a control unit 240. The functional structure illustrated in FIG. 26 is only an example. As long as the operations according to the embodiments of the present invention can be implemented, any functional categories and any functional unit names may be used.

The transmitting unit 210 creates a transmitting signal from transmitting data and transmits the transmitting signal via a wireless connection. The receiving unit 220 receives various signals via a wireless connection and obtains higher layer signals from the physical layer signals received. The receiving unit 220 also has a function to receive the NR-PSS, NR-SSS, NR-PBCH, DL/UL/SL control signals, reference signals, and so on, that are transmitted from the base station 10. The transmitting unit 210 also transmits, in D2D communication, the PSCCH, PSSCH, PSDCH, PSBCH, and son, to other terminals 20. The receiving unit 220 receives the PSCCH, PSSCH, PSDCH, PSBCH and so forth, to other terminals.

The configuration unit 230 stores various types of setting information received from the base station 10 or the terminal 20 by the receiving unit 220 in a storage device, and reads the setting information from the storage device on an as-needed basis. The configuration unit 230 also stores setting information configured in advance. The content of the setting information is, for example, information related to D2D communication settings.

As described in the above embodiment, the control unit 240 controls D2D communication for establishing an RRC connection with another terminal 20. Furthermore, the control unit 240 performs processes related to a power saving operation. The control unit 240 performs processes related to HARQ in D2D communication and DL communication. Furthermore, the control unit 240 transmits, to the base station 10, information related to HARQ responses in D2D communication and DL communication scheduled from the base station 10 to another terminal 20. The control unit 240 may schedule D2D communication to another terminal 20. Furthermore, the control unit 240 may autonomously select the resources for use in D2D communication from a resource selection window based on a result of sensing, or may execute reevaluation or pre-emption. The control unit 240 performs processes related to power saving in transmission and reception in D2D communication. Furthermore, the control unit 240 performs processes related to inter-terminal cooperation in D2D communication. In addition, the control unit 240 performs processes related to LBT in D2D communication. The functional unit for transmitting signals in the control unit 240 may be included in the transmitting unit 210, and the functional unit for receiving signals in the control unit 240 may be included in the receiving unit 220.

### (Hardware Structure)

The block diagrams (FIG. 25 and FIG. 26) used in the above description of an embodiment show blocks of functional units. These functional blocks (components) are implemented by any combination of hardware and/or software. In addition, the method of implementing each functional block is not particularly limited. That is, each functional block may be implemented by using a single device that is physically or logically a whole, or two or more devices that are physically or logically separated may be directly or indirectly connected (for example, by using a cable, radio, etc.), and each functional block may be implemented using these devices. The functional blocks may be implemented by combining software with the device or devices.

The functions include, but are not limited to, deciding, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating and mapping, assigning, and the like. For example, a functional block (configuration unit) that causes transmission to function is referred to as a transmitting unit (transmitting unit) or a transmitter. In any case, as described above, the implementation method is not particularly limited.

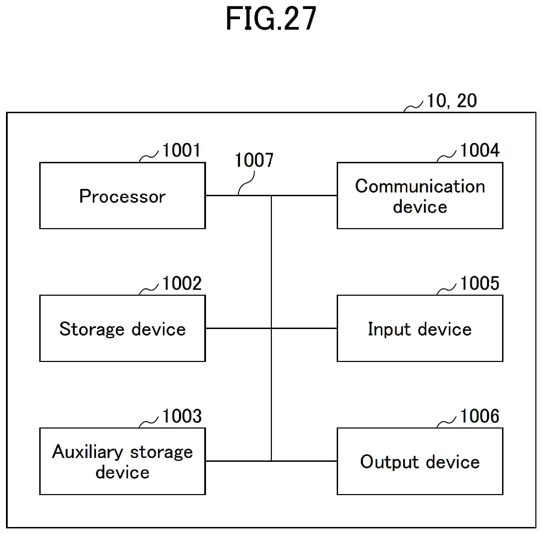

For example, the base station 10, the terminal 20, and the like in the embodiment of the present disclosure may function as a computer that performs processes of the wireless communication method of the present disclosure. FIG. 27 is a diagram showing an example of hardware structures of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware structures of the base station 10 and the terminal 20 may be configured to include one or more devices illustrated in the drawings, or may be configured without part of these devices.

Each function in the base station 10 and the terminal 20 is implemented by the processor 1001 performing calculation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including interfaces with peripheral devices, a control device, an arithmetic device, a register, and the like. For example, the control unit 140, the control unit 240, and the like described above may be implemented by the processor 1001.

In addition, the processor 1001 reads a program (a program code), a software module, data, or the like from at least one of the auxiliary storage device 1003 and the communication device 1004 to the storage device 1002, and executes various types of processing according to the program, the software module, the data, or the like. As the program, a program that causes a computer to execute at least part of the operations described in the above-described embodiments is used. For example, the control unit 140 of the base station 10 illustrated in FIG. 25 may be implemented by a control program stored in the storage device 1002 and operated by the processor 1001. Furthermore, for example, the control unit 240 of the terminal 20 illustrated in FIG. 26 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be configured with, for example, at least one of a read-only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (a transmitting/receiving device) for performing communication between computers via at least one of a wired network and a wireless network, and is also referred to as, for example, a network device, a network controller, a network card, a communication module, or the like. The communication device 1004 may be configured with a high-frequency switch, a duplexer, a filter, a frequency synthesizer, and the like to implement, for example, at least one of frequency division duplex (FDD) and time division duplex (TDD). For example, a transmitting/receiving antenna, an amplifier unit, a transmitting/receiving unit, a transmitting/receiving path interface, and the like may be implemented by the communication device 1004. The transmitting/receiving unit may be implemented such that the transmitting unit and the receiving unit are physically or logically separated from each other.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs an output to the outside. Note that the input device 1005 and the output device 1006 may be formed to be integrated with each other (for example, a touch panel).

In addition, individual devices such as the processor 1001 and the storage device 1002 are connected with each other by the bus 1007 for communicating information. The bus 1007 may be configured using a single bus or may be configured using different buses per connection.

Furthermore, the base station 10 and the terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of the pieces of hardware.

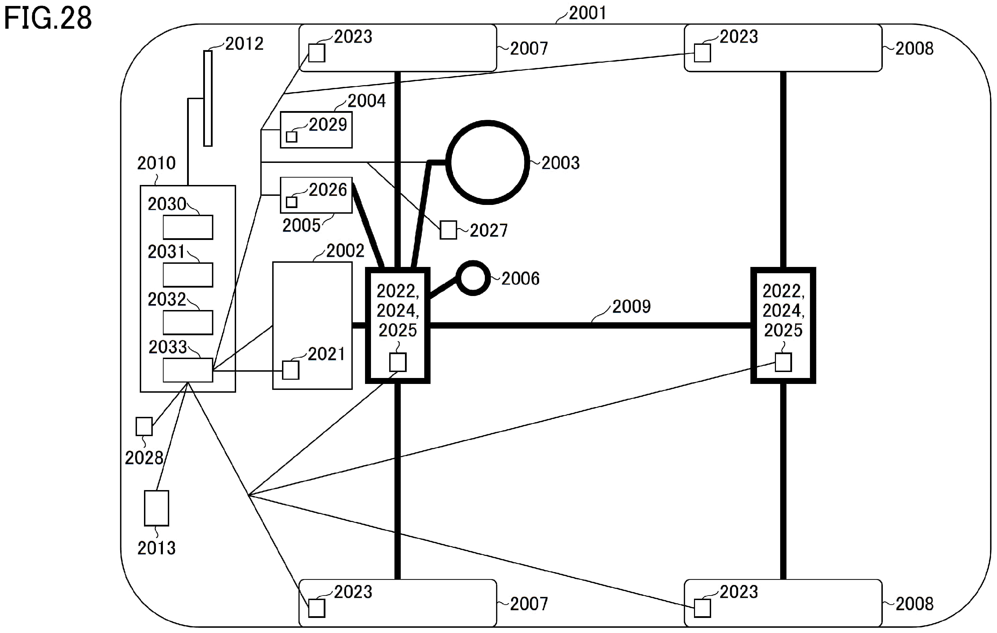

FIG. 28 illustrates a configuration example of a vehicle 2001. As illustrated in FIG. 28, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by a user.

The electronic control unit 2010 includes a microprocessor 2031, a memory (ROM, RAM, etc.) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of signals from the sensors 2021 to 2029 include: a current signal from the current sensor 2021 that senses the current of the motor; a rotation speed signal of the front wheel and the rear wheel acquired by the rotation speed sensor 2022; an air pressure signal of the front wheel and the rear wheel acquired by the air pressure sensor 2023; a vehicle speed signal acquired by the vehicle speed sensor 2024; an acceleration signal acquired by the acceleration sensor 2025; a depression amount signal of an accelerator pedal acquired by the accelerator pedal sensor 2029; a depression amount signal of a brake pedal acquired by the brake pedal sensor 2026; an operation signal of a shift lever acquired by the shift lever sensor 2027; and a detection signal for detecting an obstacle, a vehicle, a pedestrian, and the like, acquired by the object detection sensor 2028.

The information service unit 2012 is composed of: a variety of equipment, such as a car navigation system, an audio system, speakers, a television, and a radio, for providing (outputting) various types of information such as driving information, traffic information, and entertainment information; and one or more ECUs that control these pieces of equipment. The information service unit 2012 uses information obtained from an external device via the communication module 2013 or the like, to provide various types of multimedia information and multimedia services to the occupants of the vehicle 2001. The information service unit 2012 may include an input device for receiving inputs from the outside (for example, a keyboard, a mouse, a microphone, a switch, a button, a sensor, etc.), or include an output device for sending outputs to the outside (for example, a display, a speaker, an LED lamp, a touch panel, etc.).

A driving assistance system unit 2030 is configured with various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs that control the devices. The driving assistance system unit 2030 also transmits and receives various types of information via the communication module 2013 to implement a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM, etc.) 2032 in the electronic control unit 2010, and the sensors 2021 to 2029 provided in the vehicle 2001.

The communication module 2013 is a communication device capable of being controlled by the microprocessor 2031 of the electronic control unit 2010 and capable of communicating with an external device. For example, various types of information are transmitted and received to and from the external device via wireless communication. The communication module 2013 may be provided on the inside or the outside of the electronic control unit 2010. The external device may be, for example, a base station, a mobile station, or the like.

The communication module 2013 may transmit at least one of: signals input to the electronic control unit 2010 from the sensors 2021 to 2028; information obtained based on these signals; and information based on inputs from the outside (user) obtained via the information service unit 2012, to external devices via wireless communication. The electronic control unit 2010, the sensors 2021 to 2028, the information service unit 2012, and the like may be referred to as an "input unit" that accepts inputs. For example, a PUSCH transmitted from the communication module 2013 may include information that is based on an input such as one described above.

The communication module 2013 receives various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on a PDSCH (or data/information decoded from a PDSCH) received by the communication module 2013). In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Summary of Embodiment)

As described above, according to an embodiment of the present invention, a terminal is provided. This terminal includes:
a control unit configured to select fourth resources when detecting first resources reserved by another terminal in an unlicensed band, the fourth resources not including:
   the first resources;
   second resources preceding the first resources in the time domain and including a first number of resources; or
   third resources following the first resources in the time domain and including a second number of resources;
a receiving unit configured to perform listen-before-talk (LBT) for using the fourth resources; and
a transmitting unit configured to carry out a transmission using the fourth resources when the LBT is successful, and
each resource included in the second and third resources has a predetermined length.

Structured and configured as described above, when employing multi-consecutive-slot transmission (MCSt), the UE can clearly identify the resources it should not select, based on which resources are reserved by other UEs. This can reduce the likelihood of LBT failures in unlicensed bands.

The control unit may determine the predetermined length based on the number of consecutive slots in multi-consecutive-slot transmission (MCSt). Structured and configured thus, when employing MCSt, the UE can clearly identify the resources it should not select, based on which resources are reserved by other UEs.

The control unit may determine the predetermined length based on the priority of the transmission. Structured and configured thus, when employing MCSt, the UE can clearly identify the resources it should not select, based on which resources are reserved by other UEs.

The control unit may determine the predetermined length based on the first resources. Structured and configured thus, when employing MCSt, the UE can clearly identify the resources it should not select, based on which resources are reserved by other UEs.

The control unit may determine the predetermined length based on subcarrier spacing. Structured and configured thus, when employing MCSt, the UE can clearly identify the resources it should not select, based on which resources are reserved by other UEs.

Furthermore, according to an embodiment of the present invention, a communication method is provided. This communication method includes:
a step of selecting fourth resources when detecting first resources reserved by another terminal in an unlicensed band, the fourth resources not including:
   the first resources;
   second resources preceding the first resources in the time domain and including a first number of resources; or
   third resources following the first resources in the time domain and including a second number of resources;
a step of performing listen-before-talk (LBT) for using the fourth resources; and
a step of carrying out a transmission using the fourth resources when the LBT is successful, and
each resource included in the second and third resources has a predetermined length.

Structured and configured as described above, when employing MCSt, the UE can clearly know which resources it should not select, based on which resources are reserved by other UEs. In other words, the likelihood of LBT failures in unlicensed bands can be reduced.

### (Notes on Embodiment)

Although the embodiments of the present invention have been described above, the disclosed invention is by no means limited to such embodiments, and those skilled in the art will understand various modifications, revisions, alternatives, substitutions, and the like. Although the description has been given using specific numerical examples to facilitate understanding of the invention, the numerical values are merely examples, and any appropriate value may be used, unless otherwise specified. The classification of items in the above description is not essential to the present invention, and items described in two or more items may be used in combination on an as-needed basis, or items described in one item may be applied to items described in another item (as long as there is no contradiction). A boundary of a functional unit or a processing unit in the functional block diagram does not necessarily correspond to a boundary of a physical component. The operations of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be implemented by hardware, software, or a combination thereof. Software operated by a processor included in the base station 10 according to the embodiments of the present invention, and software operated by a processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the indication of information is by no means limited to the aspects/embodiments described in the present disclosure, and may be performed using other methods. For example, the indication of information may be performed by physical layer signaling (for example, downlink control information (DCI) and uplink control information (UCI)), higher layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be referred to as, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), x-th generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system which is extended, modified, generated, and specified based thereon. A plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from a higher layer (or a lower layer) to a lower layer (or a higher layer). Input and output may be performed via multiple network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) and a wireless technology (infrared rays, microwaves, or the like), at least one of the wired and wireless technologies is included within the definition of the transmission medium.

Information, signals, and the like described in the present disclosure may be represented using any one of a variety of different techniques. For example, data, an instruction, a command, information, a signal, a bit, a symbol, a chip, and the like which may be mentioned throughout the above description may be represented by a voltage, a current, an electromagnetic wave, a magnetic field or a particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are interchangeable.

In addition, information, parameters, and the like described in the present disclosure may be represented using an absolute value, may be represented using a relative value from a predetermined value, or may be represented using another piece of corresponding information. For example, a radio resource may be indicated by an index.

The names used for parameters described above are not limitative names in any way. Furthermore, mathematical formulas and the like using the parameters may be different from those explicitly disclosed in the present disclosure. Since various channels (for example, PUCCH, PDCCH, and the like) and information elements can be identified by any suitable names, various names assigned to the various channels and information elements are not limitative names in any way.

In the present disclosure, terms such as "base station (BS)," "radio base station," "base station," "fixed station, " "NodeB," "eNodeB (eNB)," "gNodeB (gNB)," "access point," "transmission point," "reception point," "transmitting/receiving point," "cell," "sector," "cell group," "carrier," and "component carrier" can be used interchangeably. The base station may also be referred to as a macro cell, a small cell, a femto cell, a pico cell, or the like.

The base station may accommodate one or more (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station and the base station subsystem that performs communication service in the coverage.

In the present disclosure, when a base station transmits information to a terminal, this may be interpreted to mean that the base station controls or send a command to the terminal based on the information.

In the present disclosure, terms such as "mobile station (MS)," "user terminal," "user equipment (UE)," and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a "transmission device," a "receiving device," a "communication device," or the like. At least one of the base station and the mobile station may be a device installed in a mobile entity, a mobile entity itself, or the like. The mobile entity refers to a movable object, and its speed of movement may be determined at its discretion. It also naturally includes the case in which the mobile entity is stationary. Examples of the mobile entity include, but are not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, airplanes, a rocket, an artificial satellite, a drone (registered trademark), a multicopter, a quadcopter, a balloon, and objects mounted on these. The mobile entity may also be a mobile entity that travels autonomously based on operation commands. The mobile object may be a vehicle (for example, a car, an airplane, or the like), a mobile object which is movable without human intervention (for example, a drone, a self-driving vehicle, or the like), or a robot (manned type or unmanned type). Note that at least one of the base station and the mobile station includes a device which does not necessarily move during communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication between a plurality of terminals 20 (for example, may be referred to as device-to-device (D2D), vehicle-to-everything (V2X), or the like). Here, the terminal 20 may have a function of the base station 10 described above. In addition, words such as "upstream" and "downstream" may be replaced with words corresponding to device-to-device communication (for example, "side"). For example, an uplink channel, a downlink channel, and the like may be replaced with a side channel.

Similarly, the user terminal in the present disclosure may be replaced with the base station. Here, the base station may have a function of the user terminal described above.

The terms "deciding" and "determining" used in the present disclosure may encompass a wide variety of actions. The terms "deciding" and "determining" may include considering, as "deciding" and "determining," what has been obtained by, for example, judging, calculating, computing, processing, deriving, investigating, searching (looking up, search, inquiry) (for example, searching in a table, a database, or another data structure), and ascertaining. Furthermore, "deciding" and "determining" may include considering, as "deciding" and "determining," what has been obtained by receiving (for example, receiving information), transmitting (for example, transmitting information), inputting, outputting, and accessing (for example, accessing data in a memory). In addition, "deciding" and "determining" may include considering, as "deciding" and "determining," what has been obtained by resolving, selecting, choosing, establishing, comparing, and the like. That is, "deciding" and "determining" may include considering some operations as "deciding," and "determining." "deciding (determining)" may be replaced with "assuming," "expecting," "considering," or the like.

The terms "connected," "coupled," or any variation thereof mean any direct or indirect connection or coupling between two or more elements, and one or more intermediate elements may exist between two elements which are "connected" or "coupled" to each other. The coupling or connection between the elements may be physical, logical, or a combination thereof. For example, "connection" may be replaced with "access." As used in the disclosure, two elements can be considered to be "connected" or "coupled" to each other using at least one of one or more wires, cables, and printed electric connections, and as some non-limiting and non-inclusive examples, using electromagnetic energy having wavelengths in a radio frequency domain, a microwave region, and a light (both visible and invisible) region, and the like.

The reference signal may be abbreviated as RS, or may be referred to as a pilot according to an applied standard.

As used in the disclosure, the phrase "based on" does not mean "based only on," unless explicitly stated otherwise. In other words, the description "based on" means both "based only on" and "based at least on."

Any reference to elements using designations such as "first," "second," and the like as used in the present disclosure does not generally limit the amount or order of the elements. Such designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit," a "circuit," a "device," or the like.

When the present disclosure uses the terms "include," "including," and variations thereof, the terms are intended to be inclusive in a manner similar to the term "comprising." Furthermore, the term "or" used in the present disclosure is intended not to be an exclusive OR.

A radio frame may be configured with one or more frames in a time domain. Each of one or more frames in the time domain may be referred to as a sub-frame. The sub-frame may be further configured with one or more slots in the time domain. The sub-frame may be a fixed time length (for example, 1 ms) which is independent of numerology.

The numerology may be a communication parameter applied to at least one of transmission and reception of a signal or a channel. The numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a multiple symbols (an orthogonal frequency division multiplexing (OFDM) symbol, a single carrier frequency division multiple access (SC-FDMA) symbol, and the like) in the time domain. The slot may be a time unit based on the numerology.

The slot may include a plurality of mini-slots. Each mini-slot may be configured with one or more symbols in the time domain. Furthermore, the mini-slot may be referred to as a sub-slot. The mini-slot may be configured with a smaller number of symbols than the slot. PDSCH (or PUSCH) transmitted in a time unit larger than the mini-slot may be referred to as a PDSCH (or PUSCH) mapping type A. PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame and the TTI may be a sub-frame (1 ms) in existing LTE, a period shorter than 1 ms (for example, 1 to 13 symbols), or a period longer than 1 ms. Note that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (a transport block), a code block, or a code word, or may be a processing unit such as scheduling or link adaptation. Note that, when a TTI is given, a time interval (for example, the number of symbols) in which the transport block, the code block, the code word, or the like is actually mapped may be shorter than the TTI.

Note that, when one slot or one mini-slot is referred to as the TTI, one or more TTIs (that is, one or more slots or one or more mini-slots) may be the minimum time unit of scheduling. Furthermore, the number of slots (the number of mini-slots) configuring the minimum time unit of the scheduling may be controlled.

A TTI with a time length of 1 ms may be referred to as a general TTI (TTI in LTE Rel. 8 to 12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

Note that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and a length of 1 ms or more.

The resource block (RB) is a resource allocation unit in the time domain and the frequency domain, and may include one or a plurality of consecutive sub-carriers in the frequency domain. The number of sub-carriers included in the RB may be the same regardless of the numerology, and for example, may be 12. The number of sub-carriers included in the RB may be determined based on the numerology.

In addition, the time domain of the RB may include one or more symbols, and may be a length of one slot, one mini-slot, one sub-frame, or one TTI. Each of one TTI, one sub-frame, and the like may be configured with one or more resource blocks.

Note that one or a plurality of RBs may be referred to as a physical resource block (PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as partial bandwidth or the like) may represent a subgroup of contiguous common resource blocks (common RBs) for a numerology in a carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be set in one carrier for the terminal 20.

At least one of the set BWPs may be active, and the terminal 20 may not assume that a predetermined signal/channel is transmitted and received outside the active BWPs. Note that a "cell," a "carrier," and the like in the present disclosure may be replaced with "BWP."

The above-described structures such as the radio frame, the sub-frame, the slot, the mini-slot, and the symbol are merely examples. For example, the number of sub-frames included in the radio frame, the number of slots per subframe or radio frame, the number of mini-slots included in the slot, the number of symbols and RBs included in the slot or the mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following the articles is a plural form.

In the present disclosure, the term "A and B are different" may mean "A and B are different from each other." Note that the term may mean that "A and B are different from C." Terms such as "separated" and "coupled" may be interpreted in the same manner as "different."

Each aspect/embodiment described in the present disclosure may be used alone, used in combination, or used by being switched with execution. Furthermore, indication of predetermined information (for example, indication of "being X") is by no means limited to being performed explicitly, and may be performed implicitly (for example, the predetermined information is not indicated).

Although the present disclosure has been described in detail above, it is apparent to those skilled in the art that the present disclosure is by no means limited to the embodiments described in the present disclosure. The present disclosure can be implemented as modifications and variations without departing from the spirit and scope of the present disclosure defined by the claims. Therefore, description of the present disclosure is given for the purpose of illustration and does not have any restrictive meaning to the present disclosure.

### Reference Signs List

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving assistance system unit
- 2031: microprocessor
- 2032: memory (ROM, RAM, etc.)
- 2033: communication port (IO port)

## Claims

1. A terminal comprising:
a control unit configured to select fourth resources when detecting first resources reserved by another terminal in an unlicensed band, the fourth resources not including:
the first resources;
second resources preceding the first resources in a time domain and including a first number of resources; or
third resources following the first resources in the time domain and including a second number of resources;
a receiving unit configured to perform listen-before-talk (LBT) for using the fourth resources; and
a transmitting unit configured to carry out a transmission using the fourth resources when the LBT is successful,
wherein each resource included in the second and third resources has a predetermined length.

2. The terminal according to claim 1, wherein the control unit is further configured to determine the predetermined length based on a number of consecutive slots in multi-consecutive-slot transmission (MCSt).

3. The terminal according to claim 1, wherein the control unit is further configured to determine the predetermined length based on a priority of the transmission.

4. The terminal according to claim 1, wherein the control unit is further configured to determine the predetermined length based on the first resources.

5. The terminal according to claim 1, wherein the control unit is further configured to determine the predetermined length based on subcarrier spacing.

6. A communication method comprising:
a step of selecting fourth resources when detecting first resources reserved by another terminal in an unlicensed band, the fourth resources not including:
the first resources;
second resources preceding the first resources in a time domain and including a first number of resources; or
third resources following the first resources in the time domain and including a second number of resources;
a step of performing listen-before-talk (LBT) for using the fourth resources; and
a step of carrying out a transmission using the fourth resources when the LBT is successful,
wherein each resource included in the second and third resources has a predetermined length.
